# EUROPEAN PATENT APPLICATION

(11) **EP 4 451 759 A1**
(43) Date of publication of application: **23.10.2024**
(21) Application number: 22918428.8
(22) Date of filing: 23.12.2022
(51) Int. Cl.: H04W 64/00

(54) **POSITIONING METHOD AND POSITIONING APPARATUS**

(30) Priority: 07.01.2022 CN 202210016258
(71) Applicant: Huawei Technologies Co., Ltd., Shenzhen, Guangdong 518129 (CN)
(72) Inventor: JIA, Jianxin, Shenzhen, Guangdong 518129 (CN); WU, Wenfu, Shenzhen, Guangdong 518129 (CN); ZONG, Zaifeng, Shenzhen, Guangdong 518129 (CN); HU, Xiaodong, Shenzhen, Guangdong 518129 (CN); ZHOU, Runze, Shenzhen, Guangdong 518129 (CN)
(74) Representative: Körber, Martin Hans
(86) International application number: PCT/CN2022/141399
(87) International publication number: WO 2023/130985

(57) **Abstract**

Embodiments of this application provide a positioning method and a communication apparatus. The method includes: A first location management network element performs first positioning processing on a measured device to obtain first location information. The first location management network element requests a first network element in which a positioning reference device exists to determine one or more first positioning reference devices. The first positioning reference device performs second positioning measurement to obtain second positioning measurement information. The first positioning reference device sends the second positioning measurement information to the first location management network element. The first location management network element may obtain more accurate location information of the measured device based on positioning measurement provided by the positioning reference device and first location information, to improve positioning accuracy of the measured device.

## Description

This application claims priority to Chinese Patent Application No. 202210016258.5, filed with the China National Intellectual Property Administration on January 7, 2022 and entitled "POSITIONING METHOD AND POSITIONING APPARATUS", which is incorporated herein by reference in its entirety.

### TECHNICAL FIELD

Embodiments of this application relate to the communication field, and more specifically, to a positioning method and a positioning apparatus.

### BACKGROUND

With rise of the wave of intelligence, vertical industries have an increasingly urgent requirement for positioning. A positioning function of a 5G base station was introduced in Release 16 that is of the 3rd generation partnership project (3rd generation partnership project, 3GPP) and that was frozen in June 2020. The positioning function is used in two types of application scenarios: a wide-area positioning scenario and a local-area positioning scenario.

To improve positioning accuracy in the foregoing scenarios, the industry proposes to enhance the positioning accuracy by using a positioning reference device. Based on an evaluation at the 3GPP RANI, the positioning reference device can assist in improving the positioning accuracy. However, how to choose a proper positioning reference device to improve the positioning accuracy is unknown. Therefore, it is urgent to propose a method to determine the proper positioning reference device.

### SUMMARY

Embodiments of this application provide a method for improving positioning accuracy or positioning performance.

A positioning reference device (positioning reference device) in embodiments of this application may be replaced with any one or more of the following words. Names are not limited, but all of them may have a same or related function. In addition, the following one or more words may be replaced with each other. In addition, all other positioning reference devices in this application may be replaced in this way. In addition, the positioning reference device in embodiments of this application may also be replaced with other words not exemplified in this application, and names are not limited, but all of them may have a same or related function. Unified descriptions are provided herein. When the positioning reference device appears in a subsequent embodiment, for brevity, details are not described herein again. Any one or more of the words are as follows:
a reference device (reference device), a reference user equipment (reference UE), a reference node (reference node), a transmission reception point (transmission reception point, TRP), a correction device (correction device), a correction user equipment (correction UE), a calibration user equipment (calibration UE), a calibration device (calibration device), a reference point (reference point), a positioning reference unit (positioning reference unit, PRU), a positioning reference device (positioning reference device, PRD), a differential device (differential device), a differential unit (differential unit), a positioning differential device (positioning differential device, PDD), a positioning differential unit (positioning differential unit, PDU), a correction point (correction point), a calibration point (calibration point), and the like, where the reference node may include the reference user equipment, a reference access network device, a user equipment, or an access network device, and the transmission reception point may include a reference transmission reception point (reference TRP).

The positioning reference device may alternatively be the user equipment and/or the access network device and/or a part of the access network device (for example, an NG-RAN, an evolved universal terrestrial radio access network (evolved universal terrestrial radio access network, E-UTRAN), a gNB, an eNB, a central unit (central unit, CU), a distributed unit (distribute unit, DU), a transmission reception point TRP, and the like).

That the positioning reference device is used for positioning measurement or measurement may indicate that the positioning reference device has the following functions:
1. The positioning reference device may measure a downlink positioning reference signal, and report (report) related measurement information to a location management network element. The location management network element may be a location management function (location management function, LMF) network element, a location server (location server), an evolved location management function network element (evolved location management function, eLMF), or another network element having a similar function. The name is not limited in this application.
   The reported related measurement information may include: a reference signal time difference (reference signal time difference, RSTD), a receive-transmit time difference (Rx-Tx time difference), reference signal received power (reference signal received power, RSRP), and the like.
2. The positioning reference device may send a sounding reference signal (sounding reference signal, SRS) to the access network device (for example, the gNB or the eNB) or the part (for example, the TRP) of the access network device, to enable the access network device or the part of the access network device to measure and report measurement information related to the positioning reference device to the location management network element. The location management network element may be the LMF network element. The reported related measurement information may include: relative time of arrival (relative time of arrival, RTOA), the receive-transmit time difference (Rx-Tx time difference), an angle of arrival (angle of arrival, AoA), and the like.
3. Location information of a device (for example, the positioning reference device or a first device) may be known location information. For example, the location information may be pre-configured, for example, may be geographical location coordinate information (geographic coordinate point, GCP), may be location information configured by an operator, or may be location information measured, computed, or estimated by using a positioning method, for example, may be location information measured, computed, or estimated by using one or more of the following positioning methods. For another example, the location information may be location information obtained (obtained) by using one or more different positioning methods (positioning methods) or positioning techniques (positioning techniques), such as a global navigation satellite system (global navigation satellite system, GNSS), real-time kinematic (real-time kinematic, RTK), a lidar (light detection and ranging, LIDAR), an observed time difference of arrival (observed time difference of arrival, OTDOA), an uplink time difference of arrival (uplink time difference of arrival, UL-TDOA), a downlink time difference of arrival (downlink time difference of arrival, DL-TDOA), an uplink angle of arrival (uplink angle of arrival, UL-AoA), a downlink angle of departure (downlink angle of departure, DL-AoD), a WLAN-based positioning method (WLAN-based positioning), a Bluetooth-based positioning method (Bluetooth-based positioning), multi-round trip time (multi-round trip time, Multi-RTT), a time difference of arrival (time difference of arrival, TDOA), an enhanced cell identification (enhanced cell ID, ECID), terrestrial beacon system positioning (terrestrial beacon system positioning, TBS positioning), and sensor-based positioning (sensor-based positioning). The location information of the positioning reference device may be reported (report) to the location management network element (for example, the LMF).
4. The positioning reference device may report (report) antenna direction information to the location management network element (for example, the LMF).
5. The positioning reference device may be used for timing errors estimation and compensation (timing errors estimation and compensation). Alternatively, the positioning reference device may be configured to mitigate a receive/transmit time error (mitigate the Rx/Tx timing error). Alternatively, the positioning reference device may be configured to calculate a receive/transmit time error difference (calculate the Rx/Tx timing error difference). Alternatively, the positioning reference device may be used for assisted calibration (assisted calibration). Alternatively, the positioning reference device may be configured to assist in generating calibration information (calibration information)/correction information (correction information)/differential information (differential information). Alternatively, the positioning reference device may generate the calibration information/correction information/differential information. Alternatively, the positioning reference device may be configured to assist in generating timing calibration information (timing calibration information)/timing correction information (timing correction information)/timing differential information (timing differential information). Alternatively, the positioning reference device may generate the timing calibration information/timing correction information/timing difference information. Alternatively, the positioning reference device may estimate and correct effective timing errors to support timing calibration. Alternatively, the positioning reference device assists another UE, positioning reference device, or location management network element in generating correction terms (correction terms), to assist the another UE, positioning reference device, or the location management network element in correcting a positioning measurement result or a positioning computation result. Alternatively, the positioning reference device may mitigate and calibrate the timing errors (mitigate and calibrate the timing errors). Alternatively, the first device may be configured to improve positioning performance or positioning accuracy of an angle-based positioning method (angle-based positioning method). The angle-based positioning method may include the UL-AoA positioning method and the DL-AoD positioning method.
6. The positioning reference device may be used for or support a user equipment-assisted positioning (UE assisted positioning) method. Alternatively, the positioning reference device may be used for or support a user equipment-based positioning (UE based positioning) method. Alternatively, the positioning reference device may be used for or support a network-based positioning (network based positioning) method. The "user equipment-assisted positioning" may be understood as that the positioning reference device reports the measurement information to assist the LMF in computing a final positioning result. The "user equipment-based positioning" may be understood as that the positioning reference device computes a final positioning result based on assisted measurement information provided by a network (for example, the access network device, the another UE or positioning reference device, or the LMF) and/or the measurement information obtained by the positioning reference device. The "network-based positioning" may be understood as that the network (for example, the LMF) computes a final positioning result based on the measurement information provided by the access network device and/or the UE and/or the positioning reference device.
7. The positioning reference device may be used for positioning measurement (positioning measurement), positioning estimation (positioning estimate), positioning computation (positioning computation), location computation (location computation), location measurement (location measurement), location estimation (location estimate), or measurement (measurement).

According to a first aspect, a positioning method is provided. The method includes the following steps.

A first network element receives a first message from a first location management network element. The first message is used to request the first network element to provide information about a positioning reference device. Information about one or more positioning reference devices exists in the first network element. The positioning reference device is used for positioning measurement. The first network element determines one or more first positioning reference devices based on the first message. The first network element sends the one or more first positioning reference devices to the first location management network element. Herein, the first network element may determine the one or more first positioning reference devices that meet a requirement of the first message, and the first positioning reference device may perform positioning measurement to obtain one or more positioning measurement results. This can effectively assist in improving positioning accuracy for a first device.

Alternatively, the word "provide (provide)" may be replaced with "discover (find/discovery)", "retrieve (retrieval)", or "obtain (get/obtain)", and the word "determine" may be replaced with "discover (find/discovery/query)", "retrieve (retrieval)", or "choose (choose)".

It should be understood that "exists" in "one or more positioning reference devices exists or information about one or more positioning reference devices exists" in this application may be understood as "exist (exist)", "registration", "register (register)", "registered (registered)", "existed", "configure (configure/configured)", "configured", "stored (store/stored)", "store", "storage", "subscription (subscription)", "subscribed", "subscribe", "have (has/have/had)", "possess (possess), "contain", "include (contain/include)", or the like.

It should be understood that the first positioning reference device may belong to the positioning reference devices or the positioning reference devices may include the first positioning reference device, or may be understood as that the first positioning reference device may be a part or all of the positioning reference devices.

It should be understood that sending the one or more first positioning reference devices may be sending information about the one or more first positioning reference devices, or may be sending a network function instance of the one or more first positioning reference devices. The information about the positioning reference device may include at least one of the following:
identification information of the positioning reference device, a part or all of registration information of the positioning reference device, a part or all of subscription information of the positioning reference device, a part or all of a network function configuration information (NF profile), a part or all of configuration information of the positioning reference device, a part or all of a context (context) of the positioning reference device, related information of the positioning reference device, and the like.

The first message includes at least one of the following information:
information about a reference area of the first device, information about a neighboring reference area of the reference area of the first device, and first location information of the first device, where the first device may be a positioned device. The positioned device (UE being positioned) may be a device that is being positioned, a to-be-positioned device, a target device (target UE), a device on which positioning measurement is performed, or the like. The first device may alternatively be a positioning reference device.

In addition, the location information of the first device is described above. Details are not described herein again.

In this application, the information about the reference area of the device is explained below. Details are not described herein.

With reference to the first aspect, in a possible implementation of the first aspect, that the first network element determines one or more first positioning reference devices based on the first message includes:

The first network element may determine the one or more first positioning reference devices based on the first message and/or a state of the one or more positioning reference devices. Herein, the first network element may dynamically choose a first positioning reference positioning device that meets a positioning requirement to perform assisted positioning measurement, to further improve the positioning accuracy of the first device.

Alternatively, the word "determine (determine)" may be replaced with "discover (find/discovery/query)", "retrieve (retrieval)", or "choose (choose)".

The state (state) of the positioning reference device may be a motion state (motion state/mobile state) of the positioning reference device, and may include:
the positioning reference device changing from a stationary state to the motion state, being mobile (mobile/moving), disabling (disable) a positioning function, deactivating the positioning function, changing from the motion state to the stationary state, being stationary (fixed/static/stationary), enabling (enable) the positioning function, activating the positioning function, having a moving speed greater than a value, having the moving speed less than a value, having the moving speed equal to a value, having the moving speed, or having the moving speed belonging to or not belonging to a range, and the like.

With reference to the first aspect, in a possible implementation of the first aspect, the method further includes: The first network element receives first information from the positioning reference device. The first information indicates a capability of the positioning reference device. Herein, the first network element may determine whether the positioning reference device can be used as a positioning reference device.

Alternatively, the word "indicate (indicate)" may be replaced with "notify (inform/notify)" or "express or represent (represent/express/show/mean)".

Alternatively, "indicates a capability of the positioning reference device" may be replaced with "indicates whether the positioning reference device can be used as a positioning reference device. Alternatively, "indicates a capability of the positioning reference device" may be replaced with "indicates whether the positioning reference device has the capability of the positioning reference device".

The capability of the positioning reference device may be understood as, for example, whether the positioning reference device has a related function of the foregoing positioning reference device. The indication may be indicated by using a binary bit. For example, when the bit is set to 1, it indicates that the positioning reference device has the capability of the positioning reference device; and when the bit is set to 0, it indicates that the positioning reference device does not have the capability of the positioning reference device. Alternatively, when the bit is set to 0, it indicates that the positioning reference device has the capability of the positioning reference device; and when the bit is set to 1, it indicates that the positioning reference device does not have the capability of the positioning reference device. Alternatively, when the bit indicating whether the positioning reference device has the capability of the positioning reference device is carried, it indicates that the positioning reference device has the capability of the positioning reference device; and when the bit indicating whether the positioning reference device has the capability of the positioning reference device is not carried, it indicates that the positioning reference device does not have the capability of the positioning reference device. Alternatively, when the bit indicating whether the positioning reference device has the capability of the positioning reference device is not carried, it indicates that the positioning reference device has the capability of the positioning reference device; and when the bit indicating whether the positioning reference device has the capability of the positioning reference device is carried, it indicates that the positioning reference device does not have the capability of the positioning reference device. Alternatively, the indication may be indicated by carrying other related information. For example, one or more information elements (information elements, IEs) are carried to indicate that the positioning reference device has the capability of the positioning reference device, and the one or more information elements are not carried to indicate that the positioning reference device does not have the capability of the positioning reference device. Alternatively, one or more information elements are not carried to indicate that the positioning reference device has the capability of the positioning reference device, and the one or more information elements are carried to indicate that the positioning reference device does not have the capability of the positioning reference device. Optionally, the first network element determines (determine), based on the first information, whether the positioning reference device can be used as the positioning reference device.

Optionally, the first network element may further obtain information about the capability of the positioning reference device from the subscription information of the positioning reference device.

Optionally, the first information may be carried in any one or more of the following messages or information elements, and no limitation is provided in this application:
registration request (registration request), registration complete (registration complete), deregistration accept (deregistration accept), deregistration request (deregistration request), service request (service request), service reject (service reject), service accept (service accept), control plane service request (control plane service request), uplink non-access stratum transport (UL NAS transport), mobile originated location request (mobile originated location request, MO-LR), authentication response (Authentication response), authentication failure (Authentication failure), configuration update complete (configuration update complete), identity response (identity response), notification response (notification response), security mode complete (security mode complete), security mode reject (security mode reject), security protected 5G non-access stratum message (security protected 5GS NAS message), 5G mobility management status (5G mobility management status, 5GMM status), network slice-specific authentication complete (network slice-specific authentication complete), LPP protocol data unit (LTE positioning protocol packet data unit, LPP PDU), NR protocol data unit (NR positioning protocol packet data unit, NPP PDU/NRPP PDU), LPP message (LPP message), request capabilities (request capabilities), provide capabilities (provide capabilities), request assistance data (request assistance data), provide assistance data (provide assistance data), request location information (request location information), provide location information (provide location information), LPP request or provide location information message (LPP request/provide location information message), LPP capability transfer (LPP capability transfer), LPP request or provide assistance data message (LPP request/provide assistance data message), LPP request or provide capability message (LPP request/provide capability message), LPP procedure (LPP procedure), LPP capability transfer (LPP capability transfer), NR message (NR message), NR request or provide location information message (NR request/provide location information message), NR capability transfer (NR capability transfer), NR request or provide assistance data message (NR request/provide assistance data message), NR request or provide capability message (NR request/provide capability message), NR procedure (NR procedure), NR capability transfer (NR capability transfer), PDU session establishment request (PDU session establishment request), PDU session modification request (PDU session modification request), PDU session release request (PDU session release request), remote UE report (remote UE report), NG setup request (NG setup request), transmission reception point information response (TRP information response), capability exchange (capability exchange), and the like.

With reference to the first aspect, in a possible implementation of the first aspect, the method further includes: The first network element receives second information from the positioning reference device. The second information indicates a state of the positioning reference device. Herein, the first network element may determine the state of the positioning reference device. For example, when the positioning reference device is movable and the motion state changes, the state change is reported to a second network element. The second network element may effectively choose the first positioning reference device based on the state of the positioning reference device.

Same as above, the state (state) of the positioning reference device may be the motion state (motion state/mobile state) of the positioning reference device, and may include:
the positioning reference device changing from a stationary state to the motion state, being mobile (mobile/moving), disabling (disable) a positioning function, deactivating the positioning function, changing from the motion state to the stationary state, being stationary (fixed/static/stationary), enabling (enable) the positioning function, activating the positioning function, having a moving speed greater than a value, having the moving speed less than a value, having the moving speed equal to a value, having the moving speed, or having the moving speed belonging to or not belonging to a range, and the like.

Optionally, the second information may also be carried in any one or more messages or information elements carrying the first information. Alternatively, the second information may be carried in any one or more of the foregoing messages or information elements. This is not limited in this application.

Optionally, the first network element may further send third information to the positioning reference device. The third information indicates that the positioning reference device reports the state.

Alternatively, "indicate (indicate)" may be replaced with "notify (notify/inform)" or "trigger (trigger)", and "report (report)" may be replaced with "send (send/transmit)".

Optionally, the first network element may further obtain, from the subscription information, the registration information, the configuration information, or the context of the positioning reference device, information about whether the positioning reference device is movable. Whether the positioning reference device is movable may mean whether the positioning reference device has a motion attribute, may mean whether the positioning reference device is a device that cannot move, or may mean whether the positioning reference device is a stationary device or a fixed device.

Optionally, the first network element may further obtain the state of the positioning reference device from the subscription information of the positioning reference device.

With reference to the first aspect, in a possible implementation of the first aspect, the method further includes: The first network element sends an eighth message to a network repository network element. The eighth message indicates that the positioning reference device exists in the first network element. Herein, the first network element may send the eighth message to the network repository network element after determining that the device may be used as the positioning reference device. Alternatively, the first network element may send the eighth message to the network repository network element without determining that the device can be used as the positioning reference device. Alternatively, the first network element may send the eighth message to the network repository network element after receiving the first information sent by the positioning reference device. Alternatively, the first network element sends the eighth message to the network repository network element after discovering that the information about the positioning reference device exists or that the positioning reference device exists. The eighth message may be used to update network configuration information or a network configuration (NF profile) of the first network element, so that the network repository network element can discover or find the first network element in which the information about the positioning reference device exists. The eighth message may be a network function update request "Nnrf_NFManagement_NFUpdate Request".

It should be understood that the eighth message indicates that the positioning reference device exists in the first network element. This may be that the eighth message carries an indication (indication) indicating that the positioning reference device exists in the first network element, or may be that the eighth message indicates that the positioning reference device exists in the first network element.

It should be understood that in this application, the network repository network element may be a network repository function network element (network function repository function, NRF), or may be another network element having a same or similar function. The name is not limited in this application.

Alternatively, "indicate (indicate)" may be replaced with "notify (notify/inform)".

With reference to the first aspect, in a possible implementation of the first aspect, the method further includes: The first network element sends an eighth message to a network repository network element. The eighth message carries the information about the reference area of the first device, and the eighth message indicates that the positioning reference device exists in the first network element in the reference area of the first device.

It should be understood that, that the eighth message indicates that the positioning reference device exists in the first network element in the reference area of the first device may be that the eighth message carries an indication (indication) indicating that the positioning reference device exists in the first network element in the reference area of the first device, or may be that the eighth message indicates that the positioning reference device exists in the first network element in the reference area of the first device.

In this application, the information about the reference area of the device is explained below. Details are not described herein.

With reference to the first aspect, in a possible implementation of the first aspect, the method further includes: The first network element receives fourth information of the first positioning reference device. The fourth information may include second location information and/or positioning measurement information. The second location information indicates a location of the first device that is measured/estimated/computed by the first positioning reference device, and the positioning measurement information is used for timing correction.

Alternatively, the timing correction (timing correction) may be replaced with time calibration (timing calibration), timing differential (timing differential), timing error correction (timing error correction), timing error calibration (timing error calibration), timing error differential (timing error differential), or timing adjustment (timing adjustment).

With reference to the first aspect, in a possible implementation of the first aspect, the method further includes: The first network element sends the second location information and/or the positioning measurement information to the first location management network element, so that the first location management network element computes location information of the first positioning reference device and/or the first device. Herein, the first reference positioning device may assist in improving positioning measurement and positioning computation of the first location management network element, to improve the positioning accuracy.

Alternatively, "compute (computation)" may be replaced with "determine (determine)", "measure (measurement)", or "estimate (estimate) or obtain (obtain/acquire)".

Optionally, the location information is obtained as described above, and the second location information may be at least one of the following information:
the positioning measurement information, positioning estimation information, positioning computation information, location measurement information, location estimation information, location computation information, calibration information, timing error information, differential information, correction information, differential calibration information, timing correction information, timing calibration information, timing differential information, timing adjustment information, and the like that are obtained by the first positioning reference device by performing positioning measurement on the first device.

Optionally, the fourth information may also be carried in any one or more messages or information elements carrying the first information. Alternatively, the fourth information may be carried in any one or more of the foregoing messages or information elements. This is not limited in this application.

With reference to the first aspect, in a possible implementation of the first aspect, the first network element includes an access and mobility management function network element or a location management function network element. The positioning reference device may be managed by the access and mobility management function network element or the location management function network element.

With reference to the first aspect, in a possible implementation of the first aspect, the method further includes: The first network element sends a paging message to the positioning reference device. The paging message is used to page the positioning reference device in idle state. In this way, the positioning reference device in idle state (idle) can return to a connected state (connected) to perform the positioning measurement, so that the positioning reference device is fully utilized.

Optionally, the first network element may alternatively send a first indication to the access network device. That the first indication is used to notify the positioning reference device to return to the connected state may mean that the first indication is used to notify the access network device to notify the positioning reference device to return to the connected state. In this way, signaling overheads used by the first network element to page the positioning reference device can be reduced.

Alternatively, "notify (notify/inform)" may be replaced with "indicate (indicate)" or "wakeup (wakeup)".

With reference to the first aspect, in a possible implementation of the first aspect, the method further includes: The first network element may obtain the information about the one or more positioning reference devices from a unified data management (unified data management, UDM) network element.

Optionally, the first network element may obtain the information about the one or more positioning reference devices by using the following signaling:
subscription data management (subscription data management, SDM) get (Nudm_SDM_Get), context get (Nudm_UECM_Get), subscription data management notification (Nudm_SDM_Notification), subscription data management subscribe (Nudm_SDM_Subscribe), subscription data management (Nudm_SDM_Info), subscription data management event exposure (Nudm_EventExposure_Notify), parameter provision update (Nudm_ParameterProvision_Update), or parameter provision get (Nudm_ParameterProvision_Get).

According to a second aspect, a positioning method is provided. The method includes the following steps.

A positioning reference device receives a third message from a first network element. The third message is used to request the positioning reference device to perform positioning measurement. The positioning reference device sends fourth information to a second network element. The fourth information includes second location information and/or positioning measurement information, the second location information indicates/expresses a location of a first device that is measured/estimated/computed by the positioning reference device, and the positioning measurement information is used for timing correction.

The third message may be one or more of the following, and is not limited in this application:
authentication request (authentication request), authentication result (authentication result), authentication reject (authentication reject), registration accept (registration accept), registration reject (registration reject), deregistration accept (deregistration accept), service accept (service accept), service reject (service reject), configuration update command (configuration update command), identity request (identity request), notification (notification), security mode command (security mode command), security protected 5G system non-access stratum message (security protected 5GS NAS message), 5G mobility management status (5GMM status), 5G session management status (5GSM status), remote UE report response (remote UE report response), service-level authentication command (service-level authentication command), network slice-specific authentication command (network slice-specific authentication command), network slice-specific authentication result (network slice-specific authentication result), PDU session establishment accept (PDU session establishment accept), PDU session establishment reject (PDU session establishment reject), PDU session authentication command (PDU session authentication command), PDU session authentication result (PDU session authentication result), PDU session establishment response (PDU session establishment response), PDU session modification reject (PDU session modification reject), PDU session modification command (PDU session modification reject), PDU session release reject (PDU session release reject), PDU session release command (PDU session release command), PDU session release complete (PDU session release complete), downlink non-access stratum transport (DL NAS transport), LPP protocol data unit (LTE positioning protocol packet data unit, LPP PDU), NR protocol data unit (NR positioning protocol packet data unit, NPP PDU/NRPP PDU), LPP message (LPP message), request capabilities (request capabilities), provide capabilities (provide capabilities), request assistance data (request assistance data), provide assistance data (provide assistance data), request location information (request location information), provide location information (provide location information), LPP request or provide location information message (LPP request/provide location information message), LPP capability transfer (LPP capability transfer), LPP request or provide assistance data message (LPP request/provide assistance data message), LPP request or provide capability message (LPP request/provide capability message), LPP procedure (LPP procedure), LPP capability transfer (LPP capability transfer), NR message (NR message), NR request or provide location information message (NR request/provide location information message), NR capability transfer (NR capability transfer), NR request or provide assistance data message (NR request/provide assistance data message), NR request or provide capability message (NR request/provide capability message), NR procedure (NR procedure), NR capability transfer (NR capability transfer), NG setup response (NG setup response), capability exchange (capability exchange), positioning information request (positioning information request), positioning activation request (positioning activation request), measurement request (measurement request), measurement update (measurement update), measurement abort (measurement abort), and the like.

Alternatively, "compute (computation)" may be replaced with "determine (determine)", "measure (measurement)", or "estimate (estimate)".

Alternatively, the timing correction (timing correction) may be replaced with time calibration (timing calibration), timing differential (timing differential), timing error correction (timing error correction), timing error calibration (timing error calibration), timing error differential (timing error differential), or timing adjustment (timing adjustment).

Optionally, the location information is explained as described above, and the second location information may be at least one of the following information:
the positioning measurement information, positioning estimation information, positioning computation information, location measurement information, location estimation information, location computation information, calibration information, timing error information, differential information, correction information, differential calibration information, timing correction information, timing calibration information, timing differential information, timing adjustment information, and the like that are obtained by the positioning reference device by performing positioning measurement on the first device.

The first network element may send the second location information and/or the positioning measurement information to the first location management network element based on the second location information and/or the positioning measurement information that are/is reported or provided by the positioning reference device, so that the first location management network element computes location information of the positioning reference device and/or a second device. Herein, the positioning reference device may assist in positioning measurement of the first location management network element, to improve positioning accuracy.

With reference to the second aspect, in a possible implementation of the second aspect, the method further includes: The positioning reference device sends first information to the first network element. The first information indicates a capability of the positioning reference device. Herein, the first network element may determine whether the positioning reference device can be used as a positioning reference device.

Alternatively, "indicates a capability of the positioning reference device" may be replaced with "indicates whether the positioning reference device can be used as a positioning reference device. Alternatively, "indicates a capability of the positioning reference device" may be replaced with "indicates whether the positioning reference device has the capability of the positioning reference device".

With reference to the second aspect, in a possible implementation of the second aspect, the method further includes: The positioning reference device sends second information to the first network element. The second information indicates a state of the positioning reference device. Herein, the first network element may determine the state of the positioning reference device. For example, when the positioning reference device is movable and a motion state changes, the state change is reported to the second network element. The second network element may effectively choose the positioning reference device based on the state of the positioning reference device.

Same as above, the state (state) of the positioning reference device may be the motion state (motion state/mobile state) of the positioning reference device, and may include:
the positioning reference device changing from a stationary state to the motion state, being mobile (mobile/moving), disabling (disable) a positioning function, deactivating the positioning function, changing from the motion state to the stationary state, being stationary (fixed/static/stationary), enabling (enable) the positioning function, activating the positioning function, having a moving speed greater than a value, having the moving speed less than a value, having the moving speed equal to a value, having the moving speed, or having the moving speed belonging to or not belonging to a range, and the like.

Optionally, the positioning reference device may further receive third information from the first network element. The third information indicates that the positioning reference device reports the state.

Alternatively, "indicate (indicate)" may be replaced with "notify (notify/inform)" or "trigger (trigger)", and "report (report)" may be replaced with "send (send/transmit)".

With reference to the second aspect, in a possible implementation of the second aspect, the method further includes: The positioning reference device receives a paging message from the first network element. The paging message is used to page the positioning reference device in idle state. In this way, the positioning reference device in idle state can return to a connected state to perform the positioning measurement, so that the positioning reference device is fully utilized.

Optionally, the first positioning reference device may further receive a notification message from an access network device. The notification message notifies the positioning reference device to return to the connected state. In this way, signaling overheads used by the first network element to page the positioning reference device can be reduced. The notification message may be a broadcast (broadcast) message, a radio resource control (radio resource control, RRC) message, a system information block (system information block, SIB), system information (system information), a multicast message, a unicast message, or the like.

Alternatively, "notify (notify/inform)" may be replaced with "indicate (indicate)" or "wakeup (wakeup)".

According to a third aspect, a positioning method is provided. The method includes the following steps.

A first location management network element sends a fifth message to a network repository network element. The fifth message includes fifth information, the fifth information is used to discover a first network element in which a positioning reference device exists, and the positioning reference device is used for positioning measurement. The first location management network element receives, from the network repository network element, information about one or more first network elements in which the positioning reference device exists, a configuration of the one or more first network elements in which the positioning reference device exists, or a network function instance of the one or more first network elements in which the positioning reference device exists.

It should be understood that forms of the fifth information may be diversified, and may be specifically any one of the following cases:
1. The fifth message may represent the fifth information. For example, a name of the fifth message represents the fifth information. Alternatively, the fifth information is equivalent to the fifth message. Alternatively, the fifth information is signaling represented by the fifth message. Alternatively, the fifth information is a message represented by the fifth message, or the like. "The fifth message includes fifth information, the fifth information is used to discover a first network element in which a positioning reference device exists, and the positioning reference device is used for positioning measurement" may be equivalent to "the fifth message is used to discover a first network element in which a positioning reference device exists, and the positioning reference device is used for positioning measurement".
2. The fifth information may alternatively be an information element, and is carried in the fifth message. For example, the fifth information may be a bit. For example, if the bit is set to 1, it indicates that a first network element that needs to be discovered or is discovered is the first network element in which the positioning reference device exists. Alternatively, if the bit is set to 0, it indicates that the first network element that needs to be discovered or is discovered is the first network element in which the positioning reference device exists. Alternatively, the fifth information may be one or more information elements. For example, if the one or more information elements are carried, it indicates that the first network element that needs to be discovered or is discovered is the first network element in which the positioning reference device exists. Alternatively, if the one or more information elements are not carried, it indicates that the first network element that needs to be discovered or is discovered is the first network element in which the positioning reference device exists. The one or more information elements may be one or more of the following, or may be another information element that is not exemplified, which is not limited: a target network function type (target-nf-type), a target network function instance identifier (target-nf-instance-id), a target network function fully qualified domain name (target-nf-fqdn), a global access and mobility management network element identifier (globally unique AMF identifier), a target network function set identifier (target-nf-set-id), a target network function service set identifier (target-nf-service-set-id), one or more information elements specially used to discover the first network element in which the positioning reference device exists, and the like.
3. The fifth information may be an IP address, a port number, an address, a geographical address, a fully qualified domain name (Fully Qualified Domain Name, FQDN), a callback uniform resource identifier (Callback Uniform Resource Identifier, Callback URI), or a URL of the first location management network element. Alternatively, the fifth information may be an IP address, a port number, an address, a geographical address, an FQDN, a callback URI, a uniform resource locator (Uniform Resource Locator, URL) of the network repository network element, or may be another case.

It should be understood that "exists" in "a first network element in which a positioning reference device exists, information about the first network element in which the positioning reference device exists, a configuration of the first network element in which the positioning reference device exists, or a network function instance of the first network element in which the positioning reference device exists" in this application may be understood as "exist (exist)", "registration", "register (register)", "registered (registered)", "existed", "configure (configure/configured)", "configured", "stored (store/stored)", "store", "storage", "subscription (subscription)", "subscribed", "subscribe", "have (has/have/had)", "possess (possess), "contain", "include (contain/include)", or the like. Alternatively, "discovery (discovery)" may be replaced with "retrieve (retrieval)", "query (find/query/search)", "choose (choose)", or "determine (determine)".

Alternatively, a network element in this application may be replaced with a network function instance (network function instance), a network function (network function, NF), a network function entity, or the like.

Optionally, the fifth message may be used to discover the first network element in which the positioning reference device exists. The fifth message may be "Nnrf_NFDiscovery_Request Request", or may be another message having a same function. This is not limited in this application.

Information about the first network element/network function instance/network function/network function entity in which the positioning reference device exists may include a part or all of configuration information (profile) of the first network element, a part or all of service information that can be provided by the first network element, and the like. Optionally, the fifth message further includes at least one of the following information:
information about a reference area of a first device and/or information about a neighboring reference area of the reference area of the first device, where the first device is a positioned device. The positioned device (UE being positioned) may be a device that is being positioned, a to-be-positioned device, a target device (target UE), a positioning reference device, or the like. In this application, the information about the reference area of the device is explained below. Details are not described herein.

Herein, the first location management network element may discover or obtain the first network element in which the positioning reference device exists, to further determine a proper positioning reference device for positioning measurement.

With reference to the third aspect, in a possible implementation of the third aspect, the method further includes: The first location management network element receives a seventh message. The seventh message is used to request location information of the positioning reference device or the first device, is used to request to determine the location information of the positioning reference device or the first device, or is used to provide the location information of the positioning reference device or the first device. The seventh message may be "Nlmf_Location _Determine Location Request". Alternatively, the seventh message may be "Namf_Location_ProvidePositioningInfo Request".

With reference to the third aspect, in a possible implementation of the third aspect, the method further includes: The first location management network element sends a first message to the first network element. The first message is used to request the first network element to provide information about the positioning reference device, and the first network element belongs to the one or more network elements in which the positioning reference device exists.

Alternatively, the word "provide (provide)" may be replaced with "discover (find/discovery/detect)", "retrieve (retrieval/pick up)", or " obtain (get/obtain/acquire)".

Optionally, the first message further includes at least one of the following information:
the information about the reference area of the first device, the information about the neighboring reference area of the reference area of the first device, and first location information of the first device.

Herein, the first location management network element may send the information about the reference area of the first device, the information about the neighboring reference area of the reference area of the first device, and the first location information of the first device to the first network element, so that the first network element effectively chooses the positioning reference device. In this way, the chosen positioning reference device is further enabled to perform positioning measurement, positioning estimation, positioning computation, and the like on the first device, to improve positioning accuracy.

With reference to the third aspect, in a possible implementation of the third aspect, the first network element includes an access and mobility management function network element or a location management function network element.

With reference to the third aspect, in a first possible implementation of the third aspect, the method further includes:
The fifth message further includes seventh information. The seventh information indicates that the first network element is a first network element in which the positioning reference device exists in the reference area of the first device and/or the neighboring reference area of the reference area of the first device, and the positioning reference device is used for positioning measurement.

The seventh information may be a bit. For example, if the bit is set to 1, it indicates that the first network element that needs to be discovered or is discovered is the first network element in which the positioning reference device exists in the reference area of the first device and/or the neighboring reference area of the reference area of the first device. Alternatively, if the bit is set to 0, it indicates that the first network element that needs to be discovered or is discovered is the first network element in which the positioning reference device exists in the reference area of the first device and/or the neighboring reference area of the reference area of the first device. Alternatively, the fifth information may be represented by using one or more information elements. For example, if the one or more information elements are carried, it indicates that the first network element that needs to be discovered or is discovered is the first network element in which the positioning reference device exists in the reference area of the first device and/or the neighboring reference area of the reference area of the first device. Alternatively, if the one or more information elements are not carried, it indicates that the first network element that needs to be discovered or is discovered is the first network element in which the positioning reference device exists in the reference area of the first device and/or the neighboring reference area of the reference area of the first device. The one or more information elements may be one or more of the following, or may be another information element that is not exemplified, which is not limited:
a target network function type (target-nf-type), a target network function instance identifier (target-nf-instance-id), a target network function fully qualified domain name (target-nf-fqdn), a global access and mobility management network element identifier (globally unique AMF identifier), a target network function set identifier (target-nf-set-id), a target network function service set identifier (target-nf-service-set-id), one or more information elements specially used to discover the first network element in which the positioning reference device exists, and the like.

In this application, the information about the reference area of the device is explained below. Details are not described herein.

According to a fourth aspect, a positioning method is provided. The method includes the following steps.

A network repository network element receives a fifth message from a first location management network element. The fifth message includes fifth information, the fifth information is used to discover a first network element in which a positioning reference device exists, and the positioning reference device is used for positioning measurement. The network repository network element sends, to the first location management function network element, information about one or more first network elements in which the positioning reference device exists, a configuration of the one or more first network elements in which the positioning reference device exists, or a network function instance of the one or more first network elements in which the positioning reference device exists.

It should be understood that forms of the fifth information may be diversified, and may be specifically any one of the following cases:
1. The fifth message may represent the fifth information. For example, a name of the fifth message represents the fifth information. Alternatively, the fifth information is equivalent to the fifth message. Alternatively, the fifth information is signaling represented by the fifth message. Alternatively, the fifth information is a message represented by the fifth message, or the like. "The fifth message includes fifth information, the fifth information is used to discover a first network element in which a positioning reference device exists, and the positioning reference device is used for positioning measurement" may be equivalent to "the fifth message is used to discover a first network element in which a positioning reference device exists, and the positioning reference device is used for positioning measurement".
2. The fifth information may alternatively be an information element, and is carried in the fifth message. For example, the fifth information may be a bit. For example, if the bit is set to 1, it indicates that a first network element that needs to be discovered or is discovered is the first network element in which the positioning reference device exists. Alternatively, if the bit is set to 0, it indicates that the first network element that needs to be discovered or is discovered is the first network element in which the positioning reference device exists. Alternatively, the fifth information may be one or more information elements. For example, if the one or more information elements are carried, it indicates that the first network element that needs to be discovered or is discovered is the first network element in which the positioning reference device exists. Alternatively, if the one or more information elements are not carried, it indicates that the first network element that needs to be discovered or is discovered is the first network element in which the positioning reference device exists. The one or more information elements may be one or more of the following, or may be another information element that is not exemplified, which is not limited: a target network function type (target-nf-type), a target network function instance identifier (target-nf-instance-id), a target network function fully qualified domain name (target-nf-fqdn), a global access and mobility management network element identifier (globally unique AMF identifier), a target network function set identifier (target-nf-set-id), a target network function service set identifier (target-nf-service-set-id), one or more information elements specially used to discover the first network element in which the positioning reference device exists, and the like.
3. The fifth information may be an IP address, a port number, an address, a geographical address, a fully qualified domain name (Fully Qualified Domain Name, FQDN), a callback uniform resource identifier (Callback Uniform Resource Identifier, Callback URI), or a URL of the first location management network element. Alternatively, the fifth information may be an IP address, a port number, an address, a geographical address, an FQDN, a callback URI, a uniform resource locator (Uniform Resource Locator, URL) of the network repository network element, or may be another case.

Optionally, the fifth message further includes at least one of the following information:
information about a reference area of a first device and/or information about a neighboring reference area of the reference area of the first device, where the first device is a device on which positioning measurement is performed. The positioned device (UE being positioned) may be a device that is being positioned, a to-be-positioned device, a target device (target UE), or the like. It should be noted that the first device may alternatively include the positioning reference device.

Herein, the first location management network element may discover or obtain the first network element in which the positioning reference device exists, to further determine a proper positioning reference device for positioning measurement.

With reference to the fourth aspect, in a first possible implementation of the fourth aspect, the method further includes:
The fifth message further includes seventh information. The seventh information indicates that the first network element is a first network element in which the positioning reference device exists in the reference area of the first device and/or the neighboring reference area of the reference area of the first device, and the positioning reference device is used for positioning measurement.

The seventh information is described in detail above. Details are not described herein again.

In this application, the information about the reference area of the device is explained below. Details are not described herein.

With reference to the fourth aspect, in a possible implementation of the fourth aspect, the first network element includes an access and mobility management function network element or a location management function network element.

According to a fifth aspect, a positioning method is provided. The method includes the following steps.

A second network element sends sixth information to a first access network device. The sixth information indicates that the first access network device notifies a positioning reference device to return to a connected state, and the positioning reference device is used for positioning measurement.

Alternatively, "indicate (indicate)" may be "notify (notify/inform)".

The first access network device may be an access network device (served by (R)AN) serving the first device and/or an access network device serving the positioning reference device, and the first device is a positioned device. The positioned device (UE being positioned) may be a device that is being positioned, a to-be-positioned device, a target device (target UE), or the like.

The sixth information further includes a sending periodicity (broadcast periodicity). The sending periodicity indicates a periodicity in which the first access network device sends a message indicating that the positioning reference device returns to the connected state. The message notifying the positioning reference device to return to the connected state is periodically sent, so that overheads of air interface signaling can be reduced.

Alternatively, "indicate (indicate)" may be "notify (notify/inform)".

Alternatively, the sending may include broadcast, multicast, unicast, an RRC message, a SIB message, a paging message, and the like.

Optionally, the sixth information may be carried in assistance data (assistance data), assistance information control (assistance information control), an N2 message (N2 message), a system information block (system information block, SIB), or a positioning system information block (positioning system information block, posSIB). Alternatively, the N2 message may be replaced with a message between an access management network element (for example, an AMF) and an access network device (for example, an NG-RAN).

In this way, the positioning reference device in idle state can return to the connected state to perform the positioning measurement, so that the positioning reference device is fully utilized.

With reference to the fifth aspect, in a possible implementation of the fifth aspect, the method further includes: The second network element receives a seventh message. The seventh message is used to request location information of the positioning reference device or the first device, is used to request to determine the location information of the positioning reference device or the first device, or is used to provide the location information of the positioning reference device or the first device.

With reference to the fifth aspect, in a possible implementation of the fifth aspect, the method further includes: The first access network device is an access network device serving the first device and/or an access network device serving the positioning reference device, and the first device is a positioned device. With reference to the fifth aspect, in a possible implementation of the fifth aspect, the second network element includes an access and mobility management function network element or a location management function network element.

The access and mobility management function network element or the location management function network element may be the access and mobility management function network element (served by AMF) or location management function network element that serves the first device and/or the positioning reference device.

With reference to the fifth aspect, in a possible implementation of the fifth aspect, the sixth information further includes a sending periodicity. The sending periodicity indicates a periodicity in which the first access network device sends a message indicating that the positioning reference device returns to the connected mode. With reference to the fifth aspect, in a possible implementation of the fifth aspect, the method further includes: the sixth information is carried in assistance data, assistance information control, assistance information, an N2 message, a system information block, or a positioning system information block.

Therefore, based on the method, all positioning reference devices that are in idle state and that are near the first device may be notified to return to the connected state, to further perform positioning measurement, and improve positioning accuracy of the first device.

According to a sixth aspect, a positioning method is provided. The method includes the following steps.

A first access network device receives sixth information from a second network element. The sixth information indicates that the first access network device notifies a positioning reference device to return to a connected state, and the positioning reference device is used for positioning measurement.

Alternatively, "indicate (indicate)" may be "notify (notify/inform)".

The first access network device may be an access network device (served by (R)AN) serving the first device and/or an access network device serving the positioning reference device, and the first device is a positioned device. The positioned device (UE being positioned) may be a device that is being positioned, a to-be-positioned device, a target device (target UE), or the like.

In this way, the positioning reference device in idle state can return to a connected state to perform the positioning measurement, so that the positioning reference device is fully utilized. With reference to the sixth aspect, in a possible implementation of the sixth aspect, the sixth information further includes a sending periodicity. The sending periodicity indicates a periodicity in which the first access network device sends a message indicating that the positioning reference device returns to the connected mode.

The first access network device periodically sends, based on the sixth information, the message notifying the positioning reference device to return to the connected state. The message notifying the positioning reference device to return to the connected state is periodically sent, so that overheads of air interface signaling can be reduced.

Alternatively, "indicate (indicate)" may be "notify (notify/inform)".

Alternatively, the sending may include broadcast, multicast, unicast, an RRC message, a SIB message, a paging message, and the like.

Optionally, the sixth information may be carried in assistance data (assistance data), assistance information control (assistance information control), an N2 message (N2 message), a system information block (system information block, SIB), or a positioning system information block (positioning system information block, posSIB). Alternatively, the N2 message may be replaced with a message between an access management network element (for example, an AMF) and an access network device (for example, an NG-RAN).

In this way, the positioning reference device in idle state can return to a connected state to perform the positioning measurement, so that the positioning reference device is fully utilized.

With reference to the sixth aspect, in a possible implementation of the sixth aspect, the second network element includes an access and mobility management function network element or a location management function network element.

The access and mobility management function network element or the location management function network element is the access and mobility management function network element (served by AMF) or location management function network element that serves the first device and/or the positioning reference device.

Therefore, all positioning reference devices that are in idle state and that are near the first device may be notified to return to the connected state, to further perform the positioning measurement, and improve positioning accuracy of the first device.

According to a seventh aspect, a communication apparatus is provided. The communication apparatus has functions of implementing the method according to any one of the first aspect to the sixth aspect or the method according to any one of the possible implementations of the first aspect to the sixth aspect. The functions may be implemented by hardware, or may be implemented by hardware executing corresponding software. The hardware or the software includes one or more units corresponding to the foregoing functions.

According to an eighth aspect, a communication apparatus is provided. The communication apparatus includes a processor and a memory. Optionally, the communication apparatus may further include a transceiver. The memory is configured to store a computer program, and the processor is configured to: invoke and run the computer program stored in the memory, and control the transceiver to receive and send a signal, to enable the communication apparatus to perform the method according to any one of the first aspect to the sixth aspect or the method according to any one of the possible implementations of the first aspect to the sixth aspect.

According to a ninth aspect, a communication apparatus is provided. The communication apparatus includes a processor and a communication interface. The communication interface is configured to: receive data and/or information, and transmit the received data and/or information to the processor. The processor processes the data and/or information, and the communication interface is further configured to output data and/or information processed by the processor, to enable the method according to any one of the first aspect to the sixth aspect or the method according to any one of the possible implementations of the first aspect to the sixth aspect to be performed.

According to a tenth aspect, a computer-readable storage medium is provided. The computer-readable storage medium stores computer instructions. When the computer instructions are run on a computer, the method according to any one of the first aspect to the sixth aspect or the method according to any one of the possible implementations of the first aspect to the sixth aspect is performed.

According to an eleventh aspect, a computer program product is provided. The computer program product includes computer program code. When the computer program code is run on a computer, the method according to any one of the first aspect to the sixth aspect or the method according to any one of the possible implementations of the first aspect to the sixth aspect is performed.

According to a twelfth aspect, a wireless communication system is provided. The wireless communication system includes one or more of network elements in the method according to any one of the first aspect to the sixth aspect.

For example, the foregoing communication apparatus is a corresponding network element in embodiments of this application.

Optionally, the corresponding network element may be a first location management network element, a network repository network element, a first network element, a second network element, or a positioning reference device. Further, optionally, the first network element may be an access and mobility management network element or a location management function network element.

### BRIEF DESCRIPTION OF DRAWINGS

FIG. 1 is a schematic diagram of an architecture of a communication system according to an embodiment of this application;
FIG. 2 is a schematic diagram of a network service-based architecture used to support positioning according to this application;
FIG. 3 is a registration flowchart of an example of registration of a positioning reference device according to this application;
FIG. 4 is a schematic interaction diagram for improving positioning accuracy of a target UE according to this application;
FIG. 5 is a schematic interaction diagram of a positioning reference device used for paging according to this application;
FIG. 6A and FIG. 6B are a schematic interaction diagram of an example for improving positioning accuracy of a target UE according to this application;
FIG. 7A and FIG. 7B are a schematic interaction diagram of another example for improving positioning accuracy of a target UE according to this application;
FIG. 8A and FIG. 8B are a schematic interaction diagram of another example for improving positioning accuracy of a target UE according to this application;
FIG. 9A and FIG. 9B are a schematic interaction diagram of another example for improving positioning accuracy of a target UE according to this application;
FIG. 10 is a schematic block diagram of a communication apparatus according to this application; and
FIG. 11 is a schematic diagram of a structure of a communication apparatus according to this application.

### DESCRIPTION OF EMBODIMENTS

The following describes technical solutions of embodiments in this application with reference to accompanying drawings.

The technical solutions in embodiments of this application may be applied to various communication systems, for example, a long term evolution (long term evolution, LTE) system, a long term evolution-advanced (long term evolution-advanced, LTE-A) system, an enhanced long term evolution (enhanced long term evolution-advanced, eLTE), a 5th generation (5th Generation, 5G) mobile communication system, and a new radio (New Radio, NR) system, and may also be extended to a similar wireless communication system, such as a wireless fidelity (wireless-fidelity, Wi-Fi) system, a worldwide interoperability for microwave access (worldwide interoperability for microwave access, WIMAX) system, a cellular system related to the 3rd generation partnership project (3rd generation partnership project, 3GPP), and a future communication system.

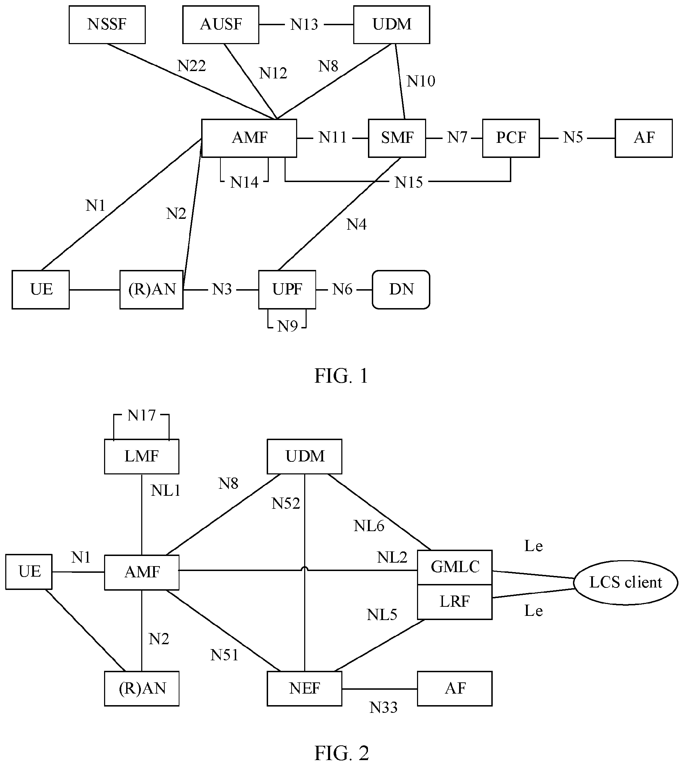

With updates of mobile communication technologies, a 5G network is constructed in a flexible and efficient manner. In the 5G network, a communication positioning sensing capability may be used as a new capability. A system architecture of the 5G network may be shown in FIG. 1.

FIG. 1 is an example of the architecture of the 5G communication system applicable to this application. Functions of a terminal device and network entities are described below.

The terminal device may be a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a 5G network, a terminal device in a long term evolution public land mobile network (Public Land Mobile Network, PLMN), or the like.

A radio access network (radio access network, RAN) is a network including a plurality of 5G-RAN nodes, and implements a radio physical layer function, resource scheduling and radio resource management, radio access control, and a mobility management function. The 5G-RAN is connected to a UPF through a user plane interface N3 to communicate data of the terminal device. The 5G-RAN establishes a control plane signaling connection to an AMF through a control plane interface N2 to implement functions such as radio access bearer control.

An access and mobility management function (access and mobility management function, AMF) is mainly responsible for functions such as registration and authentication of the terminal device, mobility management of the terminal device, receiving signaling related to the radio access network, and network slice selection; serves as an anchor point of a signaling connection between N1 and N2, and provides a route of an N1/N2 session management (session management, SM) message for a session management function (session management function, SMF); and maintains and manages state information of the terminal device.

The session management function (session management function, SMF) is mainly responsible for all control plane functions of session management of the terminal device, including choosing a user plane function (user plane function, UPF), allocating an internet protocol (internet protocol, IP) address, managing quality of service (quality of service, QoS) of a session, obtaining a policy and charging control (policy and charging control, PCC) policy (from a PCF), and the like.

A unified data management (unified data management, UDM) is mainly configured to: manage and control data of the terminal device, for example, subscription information management, including obtaining subscription information from a unified data repository (unified data repository, UDR) and providing the subscription information to another network element (for example, the AMF); generate a third generation partnership project (the third generation partnership project, 3GPP) authentication credential for the terminal device; and register and maintain a network element currently serving the terminal device, for example, an AMF (serving AMF) currently serving the terminal device.

An authentication server function (authentication server function, AUSF) is configured to perform security authentication on the terminal device when the terminal device accesses the network.

A network slice selection function (network slice selection function, NSSF) selects a slice instance set for the terminal device, and determines an AMF set and an allowed NSSAI for the terminal device.

A policy control function (policy control function, PCF) is responsible for policy management of the terminal device, including a mobility-related policy and a session-related policy, and provides policy information for managing and controlling the terminal device to a control plane network element (for example, the AMF or the SMF) in the network, for example, a quality of service (quality of service, QoS) policy and a charging policy.

An application function (application function, AF) interacts with a core network element to provide some services, for example, interacts with the PCF to perform service policy control, and provides information about some data network access points to the PCF to generate routing information of a corresponding data service.

The UPF serves as an anchor point of a protocol data unit (protocol data unit, PDU) session connection, and is responsible for data packet filtering, data transmission/forwarding, rate control, charging information generation, and the like of the terminal device.

Interfaces between network elements in FIG. 1 are shown in FIG. 1.

It should be noted that the network architecture in FIG. 1 may further include another network element, for example, a network element or a device such as a unified data repository (unified data repository, UDR), a network storage function (network repository function, NRF), and a network capability exposure function (network exposure function, NEF). This is not specifically limited. The network elements and the interfaces between the network elements in FIG. 1 may have other names. This is not specifically limited in embodiments of this application.

FIG. 2 is a schematic diagram of a network service-based architecture used to support positioning. As shown in FIG. 2, the architecture is extended based on the architecture shown in FIG. 1. For example, a plurality of functional entities such as a gateway mobile location center (gateway mobile location center, GMLC), a location retrieval function (location retrieval function, LRF), a location service client (location service client, LCS client), and a location management function (location management function, LMF) are added, to support a service function of positioning.

In FIG. 1 and FIG. 2, names and functions of the interfaces between the network elements are as follows:
(1) N1 is an interface between the AMF and the terminal device, and may be configured to transfer a QoS control rule to the terminal, and the like.
(2) N2 is an interface between the AMF and the RAN, and may be configured to transfer radio bearer control information from a core network side to the RAN, and the like.
(3) N3 is an interface between the RAN and the UPF, and is mainly configured to transfer uplink and downlink user-plane data between the RAN and the UPF.
(4) N4 is an interface between the SMF and the UPF, and may be configured to transfer information between a control plane and a user plane, including delivering a forwarding rule, a QoS control rule, a traffic statistical rule, or the like from the control plane to the user plane, and reporting information about the user plane.
(5) N5 is an interface between the AF and the PCF, and may be configured to deliver an application service request and report a network event.
(6) N6 is an interface between the UPF and the DN, and is configured to transfer uplink and downlink user data flows between the UPF and the DN.
(7) N7 is an interface between the PCF and the SMF, and may be configured to deliver a PDU session granularity and a service data flow granularity control policy.
(8) N8 is an interface between the AMF and the UDM, and may be used by the AMF to obtain subscription data and authentication data that are related to access and mobility management from the UDM, may be used by the AMF to obtain information related to current mobility management of a registered terminal from the UDM, and the like.
(9) N9 is a user-plane interface between UPFs, and is configured to transfer uplink and downlink user data flows between the UPFs.
(10) N10 is an interface between the SMF and the UDM, and may be used by the SMF to obtain subscription data related to session management from the UDM, is used by the SMF to obtain information related to a current session of the registered terminal from the UDM, and the like.
(11) N11 is an interface between the SMF and the AMF, and may be configured to: transfer PDU session tunnel information between the RAN and the UPF, transfer a control message sent to the terminal, transfer radio resource control information sent to the RAN, and the like.
(12) N12 is an interface between the AMF and the AUSF, and may be used by the AMF to initiate an authentication procedure to the AUSF, where a subscription concealed identifier (subscription concealed identifier, SUCI) may be carried as a subscription identifier.
(13) N13 is an interface between the UDM and the AUSF, and may be used by the AUSF to obtain a user authentication vector from the UDM, to perform the authentication procedure.
(14) N15 is an interface between the PCF and the AMF, and may be configured to deliver a terminal policy and a policy related to access control.
(15) N17 is a control-plane interface between LMFs, and is configured to transfer interaction signaling between the LMFs.
(16) NL1 is an interface between the AMF and the LMF, and may be configured to transfer information related to mobility management and a control policy.
(17) NL2 is an interface between the AMF and the GMLC, and may be configured to deliver a client policy and a policy related to access control.
(18) Le is an interface between the LCS client and the GMLC, and may be configured to transfer a client policy delivered by the core network and the policy related to access control, or upload request signaling related to a client location service.

The network element or the function may be a network element in a hardware device, may be a software function running on dedicated hardware, or may be a virtualized function instantiated on a platform (for example, a cloud platform). Optionally, the network element or the function may be implemented by one device, may be jointly implemented by a plurality of devices, or may be a functional module in one device. This is not specifically limited in embodiments of this application.

The access network device in embodiments of this application may be a radio access network device.

In addition, the "network element" in this specification may also be referred to as a network function instance (network function instance), a network function (network function, NF), a device, an apparatus, a module, or the like. This is not particularly limited in this application.

For example, in some network architectures, network function entities such as an AMF, an LMF, an NRF, and a UDM are all referred to as network function (network function, NF) network elements. Alternatively, in some other network architectures, network elements such as an AMF, an LMF, an NRF, and a UDM may be referred to as control plane function (control plane function, CPF) network elements.

It should be understood that FIG. 1 and FIG. 2 are merely examples of the network architecture, and a network architecture applicable to embodiments of this application is not limited thereto. Any network architecture that can implement functions of the foregoing network elements is applicable to embodiments of this application.

In addition, information about a reference area in this specification may be information about a reference area of a device. The device may be a terminal device, a user equipment, a positioning reference device, a first device, or the like. The information about the reference area may include at least one of the following: information about a location area covered by an access network device serving the device, where the information about the location area may include an identifier of a cell in which the device is located and/or an identifier of the access network device; or information about a location area that is of the device and that is covered by a target access network device of the device, a cell global identifier (cell global identifier, CGI), an identifier of the access network device, an identifier of a tracking area, an identifier of a PLMN, global positioning system (global positioning system, GPS) geographic location information, a sector identifier, a physical cell identifier (physical cell identifier, PCI), an antenna identifier, a distributed unit (distributed unit, DU) identifier, a central unit (central unit, CU) identifier, a transmission reception point TRP identifier, and the like.

The identifier of the access network device may be a next generation NodeB identifier (next generation NodeB identifier, gNB ID), a next generation radio access network identifier (next generation radio access network identifier, NG-RAN ID), or the like, and the identifier of the tracking area may be a tracking area identifier (tracking area identifier, TAI), a tracking area code (tracking area code, TAC), or the like.

Information about a neighboring reference area of the reference area may be information about a neighboring reference area of the reference area of the device, for example, may be at least one of the following: an identifier (CGI) of a neighboring cell, an identifier of a neighboring access network device, an identifier of a neighboring tracking area, and an identifier of a neighboring PLMN. In addition, the GPS geographical location information, a neighboring sector identifier, a neighboring PCI, a neighboring antenna identifier, a neighboring DU identifier, a neighboring CU identifier, a neighboring TRP identifier, and the like may be further included.

The identifier of the access network device may be a gNB ID, an NG-RAN ID, an E-UTRAN ID, an eNB ID, or the like, and the identifier of the tracking area may be a TAI, a TAC, or the like.

Network elements in a 5G system (5G system, 5GS) are used as an example below to describe a specific solution in detail. It may be understood that this solution may be applied to the 5G system or a future communication system.

A positioning function of a 5G base station was introduced in Release 16 that is of the 3rd generation partnership project (3rd generation partnership project, 3GPP) and that was frozen in June 2020. The positioning function is used in two types of application scenarios: a wide-area positioning scenario and a local-area positioning scenario. To improve positioning accuracy in the foregoing scenarios, the industry proposes to enhance the positioning accuracy by using a positioning reference device. Based on an evaluation at the 3GPP RANI, the positioning reference device can assist in improving the positioning accuracy. However, how to choose a proper positioning reference device to improve the positioning accuracy is unknown. Therefore, it is urgent to propose a method to determine the proper positioning reference device.

It should be noted that the solutions in embodiments of this application may be further applied to a scenario of converged sensing and positioning. In other words, "positioning" in embodiments of this application may be replaced with "sensing" or converged sensing and positioning.

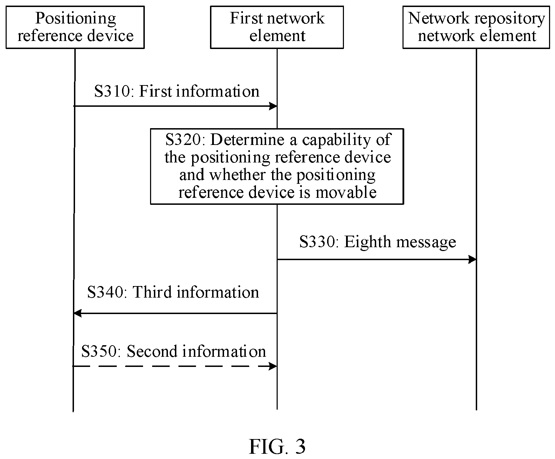

Before a positioning reference device is chosen to perform positioning measurement, the positioning reference device may first send its own information to a core network element, so that the core network element manages (manage) the positioning reference device. The following describes a process in detail with reference to FIG. 3.

In embodiments of this application, unless otherwise stated or there is a logic conflict, terms and/or descriptions in different embodiments are consistent and may be mutually referenced, and technical features in the different embodiments may be combined based on an internal logical relationship thereof, to form a new embodiment.

FIG. 3 shows the process in which the positioning reference device is registered with a first network element.

The first network element may be an access management function network element (for example, an access and mobility management function network element or an AMF network element) or a location management network element (for example, a location management function network element or an LMF network element).

It should be understood the information about the positioning reference device is sent to the first network element. In other words, the information about the positioning reference device exists in the first network element. This may also be understood as that the positioning reference device is registered with, provided for, or subscribed to the first network element. In this way, the positioning reference device may be subsequently managed by using the first network element.

Specifically, the information about the positioning reference device may be related information of the positioning reference device, for example, may be a part or all of registration information of the positioning reference device, may be a part or all of subscription information, may be part or all of a context, may be a part or all of pre-configured information, may be a part or all of a network configuration of the positioning reference device, may be a part or all of network configuration information of the positioning reference device, or may be a part or all of configuration information, or the like.

In step S310, the positioning reference device sends first information to the first network element. The first information indicates a capability of the positioning reference device. The first network element receives the first information from the positioning reference device.

Specifically, the capability or capability information of the positioning reference device indicates whether the device can be used as a positioning reference device. Alternatively, the capability or capability information of the positioning reference device may be whether the device has the capability of the positioning reference device.

Optionally, the indicating a capability of the positioning reference device or the capability information of the positioning reference device in this application may include indicating whether the device can be used as the positioning reference device.

Alternatively, "indicate a capability of the positioning reference device" may be replaced with "indicate whether the positioning reference device has the capability of the positioning reference device".

It should be understood that the capability of the positioning reference device or the capability information of the positioning reference device may include whether the device can be used as the positioning reference device, for example, whether the device has a related function of the foregoing positioning reference device. The capability information of the positioning reference device may indicate the capability of the positioning reference device by using a binary bit. For example, when the bit is set to 1, it indicates that the positioning reference device has the capability of the positioning reference device; and when the bit is set to 0, it indicates that the positioning reference device does not have the capability of the positioning reference device. Alternatively, when the bit is set to 0, it indicates that the positioning reference device has the capability of the positioning reference device; and when the bit is set to 1, it indicates that the positioning reference device does not have the capability of the positioning reference device. Alternatively, when the bit indicating whether the positioning reference device has the capability of the positioning reference device is carried, it indicates that the positioning reference device has the capability of the positioning reference device; and when the bit indicating whether the positioning reference device has the capability of the positioning reference device is not carried, it indicates that the positioning reference device does not have the capability of the positioning reference device. Alternatively, when the bit indicating whether the positioning reference device has the capability of the positioning reference device is not carried, it indicates that the positioning reference device has the capability of the positioning reference device; and when the bit indicating whether the positioning reference device has the capability of the positioning reference device is carried, it indicates that the positioning reference device does not have the capability of the positioning reference device. Alternatively, the capability information of the positioning reference device may indicate the capability of the positioning reference device by carrying other related information. For example, one or more information elements are carried to indicate that the positioning reference device has the capability of the positioning reference device, and the one or more information elements are not carried to indicate that the positioning reference device does not have the capability of the positioning reference device. Alternatively, one or more information elements are not carried to indicate that the positioning reference device has the capability of the positioning reference device, and the one or more information elements are carried to indicate that the positioning reference device does not have the capability of the positioning reference device.

For example, the capability of the positioning reference device, the capability information of the positioning reference device, or the first information may be carried in any one or more of the following messages or information elements, and no limitation is provided in this application:
registration request (registration request), registration complete (registration complete), deregistration accept (deregistration accept), deregistration request (deregistration request), service request (service request), service reject (service reject), service accept (service accept), control plane service request (control plane service request), uplink non-access stratum transport (UL NAS transport), mobile originated location request (mobile originated location request, MO-LR), authentication response (Authentication response), authentication failure (Authentication failure), configuration update complete (configuration update complete), identity response (identity response), notification response (notification response), security mode complete (security mode complete), security mode reject (security mode reject), security protected 5G non-access stratum message (security protected 5GS NAS message), 5G mobility management status (5G mobility management status, 5GMM status), network slice-specific authentication complete (network slice-specific authentication complete), LPP protocol data unit (LTE positioning protocol packet data unit, LPP PDU), NR protocol data unit (NR positioning protocol packet data unit, NPP PDU/NRPP PDU), LPP message (LPP message), request capabilities (request capabilities), provide capabilities (provide capabilities), request assistance data (request assistance data), provide assistance data (provide assistance data), request location information (request location information), provide location information (provide location information), LPP request or provide location information message (LPP request/provide location information message), LPP capability transfer (LPP capability transfer), LPP request or provide assistance data message (LPP request/provide assistance data message), LPP request or provide capability message (LPP request/provide capability message), LPP procedure (LPP procedure), LPP capability transfer (LPP capability transfer), NR message (NR message), NR request or provide location information message (NR request/provide location information message), NR capability transfer (NR capability transfer), NR request or provide assistance data message (NR request/provide assistance data message), NR request or provide capability message (NR request/provide capability message), NR procedure (NR procedure), NR capability transfer (NR capability transfer), PDU session establishment request (PDU session establishment request), PDU session modification request (PDU session modification request), PDU session release request (PDU session release request), remote UE report (remote UE report), NG setup request (NG setup request), transmission reception point information response (TRP information response), capability exchange (capability exchange), and the like.

In addition, the positioning reference device may further report an identifier of the positioning reference device, location information of the positioning reference device, information about whether the positioning reference device is movable, and the like to the first network element. The information may also be carried in any one or more of the foregoing messages or information elements, and no limitation is provided in this application. Specifically, the location information of the positioning reference device may be geographical coordinate information pre-configured by an operator, or may be location information measured, computed, or estimated by using a positioning method, for example, may be location information measured, computed, or estimated by using one or more of the following positioning methods:
a global navigation satellite system, dynamic real-time kinematic, a lidar, an observed time difference of arrival, an uplink time difference of arrival, a downlink time difference of arrival, an uplink angle of arrival, a downlink angle of departure, a WLAN-based positioning method, a Bluetooth-based positioning method, a multi-round trip time, a time difference of arrival, an enhanced cell identification, terrestrial beacon system positioning, sensor-based positioning, and the like.

Specifically, the information about whether the positioning reference device is movable may specify whether the positioning reference device has a motion attribute or parameter, may specify whether the positioning reference device is a device that cannot move, may specify whether the positioning reference device is a device supporting motion, may specify that the positioning reference device is not a device supporting motion, may specify that the positioning reference device is a mobile device, or may specify whether the positioning reference device is a stationary device or a fixed device.

For example, the motion attribute or parameter of the positioning reference device may be "mobile", "stationary", "semi-stationary", or the like. This is not limited in this application.

Optionally, as described in the foregoing descriptions of the positioning reference device, the positioning reference device may be used as an access network device or a part of the access network device, and the first network element may be an AMF. The access network device or the part of the access network device may send an NG setup request message (NG setup request) to the AMF, where the NG setup request message carries capability information of becoming a positioning reference device. The message may further include an identifier of the access network device, a TAI list, and the like.

Specifically, the part of the access network device may be a DU, a CU, a TRP, or the like of the access network device.

Optionally, as described in the foregoing descriptions of the positioning reference device, the positioning reference device may be used as an access network device or a part of the access network device, and the first network element may be an LMF. The access network device or the part of the access network device may send a transmission reception point feedback message (TRP information response) to the LMF, where the message has capability information of becoming a positioning reference device.

Alternatively, the access network device sends the transmission reception point feedback message to the LMF network element, where the message includes capability information about whether one or more DUs/TRPs controlled/managed by the access network device become positioning reference devices.

Specifically, the part of the access network device may be a DU, a CU, a TRP, or the like of the access network device.

In step S320, the first network element may determine, based on the first information reported by the positioning reference device, information about whether the positioning reference device is movable, and other information, the capability of the positioning reference device and whether the positioning reference device is movable.

Specifically, the first network element determines, based on the first information, whether the device has the capability of becoming a positioning reference device.

Optionally, the first network element may also obtain, from the registration information, the configuration information, the subscription information, or the context of the device, information about whether the device has the capability of becoming a positioning reference device.

Specifically, the first network element determines, based on the information about whether the device is movable, whether the device is movable.

Optionally, the first network element may obtain, from the registration information, the configuration information, the subscription information, or the context of the device, information about whether the device is movable.

Optionally, as described in step S310, the positioning reference device may further report the location information of the positioning reference device.

Specifically, the first network element may determine whether an error range between the location information provided by the positioning reference device and the location information of the positioning reference device in the registration information, the subscription information, the configuration information, or the context meets a first condition. If the first condition is met, the first network element may store the location information reported by the positioning reference device in the information about the positioning reference device.

It should be understood that, for example, the first condition in this application may mean that the location information of the positioning reference device is greater than, less than, or equal to a specific value; the location information of the positioning reference device belongs to or does not belong to a range; an error between the location information of the positioning reference device and the location information in the subscription information, the pre-configured information, the registration information, or the context of the positioning reference device is greater than, less than, or equal to a specific value or a specific range. This is not limited in this application.

Optionally, if information reported by the positioning reference device does not include the location information of the positioning reference device, the first network element may request the LMF to measure the location information of the positioning reference device and store the location information in the information about the positioning reference device, for example, may store the location information in the subscription information, the registration information, the configuration information, or the context information of the positioning reference device.

In step S330, if the device has the capability of the positioning reference device, the device may be registered with the first network element.

Specifically, the first network element sends an eighth message to a network repository network element. The eighth message indicates that the positioning reference device exists in the first network element. The network repository network element receives the eighth message from the first network element, and may update network function configuration (network function profile, NF Profile) information of the first network element.

Optionally, the eighth message may be a network function management update request message "Nnrf_NFManagement_NFUpdate Request".

Specifically, that the positioning reference device is registered with the first network element may be that the information about the positioning reference device exists in the first network element. The information about the positioning reference device may be the related information of the positioning reference device. For example, the related information may be a part or all of the registration information of the positioning reference device, may be a part or all of the subscription information of the positioning reference device, may be a part or all of the configuration information of the positioning reference device, or may be a part or all of the context of the positioning reference device. Alternatively, the related information may be other related information of the positioning reference device. This is not limited in this application.

In addition, if the device does not have the capability of the positioning reference device, the device may also be registered with the first network element, but the first network element does not need to send the eighth message to the network repository network element.

In step S340, the first network element sends third information to the positioning reference device. The third information indicates that the positioning reference device reports a state.

Optionally, the positioning reference device may be used as an access network device or a part of the access network device, and the first network element may be an AMF. The AMF sends an NG setup response message (NG setup response) to the access network device. The message may include the third information.

Optionally, the positioning reference device may be used as an access network device or a part of the access network device, and the first network element may be an LMF. The LMF sends a transmission reception point response message to the access network device. The message may carry the third information.

Specifically, if the positioning reference device is movable, the first network element may send the third information to the positioning reference device.

It should be understood that, that the third information indicates that the positioning reference device reports a state may include:
a motion state of the positioning reference device, where the motion state of the positioning reference device may include:
the positioning reference device changing from static to mobile, moving, disabling the positioning function, deactivating the positioning function, changing from mobile to static, static, enabling the positioning function, activating the positioning function, or having a moving speed greater than a value, a moving speed less than a value, a moving speed equal to a value, or a moving speed belonging to or not belonging to a range, and the like. Content of the report is not limited in this application, provided that a meaning is indicated.

When the state of the positioning reference device changes, current state information needs to be reported to the first network element.

Optionally, if the positioning reference device cannot move, the first network element may not send the third information to the positioning reference device.

It should be understood that, when the positioning reference device moves, precision of positioning measurement may be affected if the positioning measurement is performed. Therefore, the positioning reference device needs to report the state information to the first network element. Therefore, based on the state information reported by the positioning reference device, the first network element may dynamically choose a positioning reference device.

Optionally, in step S350, the positioning reference device sends second information to the first network element. The second information indicates a state of the positioning reference device.

It should be understood that the second information may be reported by the positioning reference device to the first network element after receiving the third information of the first network element, or may be actively reported by the positioning reference device to the first network element. This is not limited in this application.

Optionally, the first network element may also obtain the state of the positioning reference device from the subscription information, the registration information, the configuration information, or the context information of the positioning reference device.

As described above, based on the procedure shown in FIG. 3, the information about the positioning reference device may be reported or sent to the first network element, so that the first network element manages the positioning reference device, to help choose a proper positioning reference device to perform the positioning measurement.

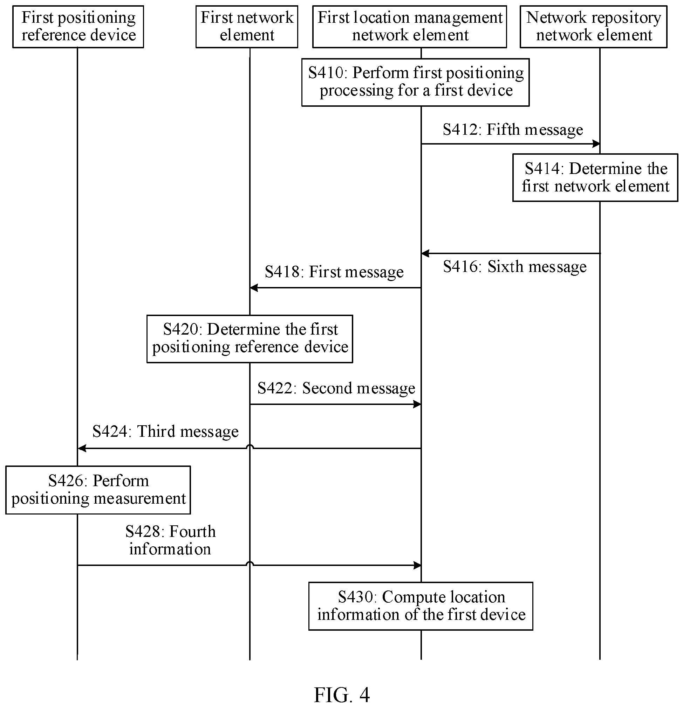

FIG. 4 describes in detail how to choose a proper positioning reference device to improve positioning accuracy for a first device. FIG. 4 is a schematic interaction diagram of a positioning method for improving the positioning accuracy of the first device according to this application.

There may be one or more positioning reference devices, and there may also be one or more first devices (target UE or group of target UEs). This is not limited in this application.

For example, the first device may be a positioned device, a positioned target terminal device, a positioned terminal device, a target terminal device that needs to be positioned, a terminal device that needs to be positioned, a target terminal device whose location information needs to be obtained, a device that whose location information needs to be obtained, another device whose location information is required by an NF, another terminal device whose location information is required by the NF, or the like. This is not limited in this application.

In addition, the first device may alternatively include a positioning reference device. This is not limited in this application.

In step S410, a first location management network element performs first positioning processing for the first device to obtain first location information. The first location management network element may be an LMF that provides a positioning service for the first device.

Optionally, the first location management network element receives a seventh message. The seventh message is used to request location information of the first device, is used to request to determine the location information of the first device, or is used to provide the location information of the first device.

Specifically, the seventh message used to request to determine the location information of the first device may be "Nlmf_Location _Determine Location Request".

Specifically, the seventh message used to request to provide the location information of the first device may be "Namf_Location_ProvidePositioningInfo Request".

Specifically, for the first location information, refer to the foregoing descriptions. Details are not described herein again.

In step S412, the first location management network element sends a fifth message to a network repository network element. The fifth message includes fifth information, and the fifth information is used to discover a first network element in which one or more positioning reference devices exist. The network repository network element receives the fifth message from the first location management network element.

The fifth message may be "Nnrf_NFDiscovery_Request Request". This is not limited in this application.

Optionally, the fifth message may include information about a reference area of the first device and/or information about a neighboring reference area of the reference area of the first device. For the information about the reference area of the first device and/or the information about the neighboring reference area of the reference area of the first device, refer to the foregoing descriptions. Details are not described herein again.

Specifically, the information about the reference area of the first device and/or the information about the neighboring reference area of the reference area of the first device are/is used to represent the reference area of the first device.

It should be understood that a first network element in which exists a positioning reference device in the reference area is queried by using the fifth message.

Optionally, a network element type to which the first network element belongs may also be filtered and queried. For example, the fifth message may be used to query a network element whose network element type is an AMF and that includes the positioning reference device in the reference area of the first device, and the network element is denoted as an AMF #A below.

In step S414, the network repository network element determines (determine) the first network element based on the fifth message. There may be one or more first network elements. This is not limited in this application.

Alternatively, the "determine" may be replaced with "discover (find/discovery)", "query (query)", "search (search)", "retrieve (retrieval)", and the like. This is not limited in this application.

Messages corresponding to "retrieval" may be "Nnrf_NFManagement_NFListRetrieval Request" and " Nnrf_ NFManagement_NFListRetrieval Request". This is not limited in this application.

In step S416, the network repository network element sends a sixth message to the first location management network element. The sixth message includes or carries the one or more the first network elements in which the positioning reference device exists. The first location management network element receives the sixth message from the network repository network element.

The sixth message may be "Nnrf_NFDiscovery_Request Response". This is not limited in this application.

Specifically, that the sixth message includes the one or more first network elements in which the positioning reference device exists may refer to network function configuration information (NF profile) of the one or more first network elements in which the positioning reference device exists. Alternatively, the one or more first network elements in which the positioning reference device exists may refer to configuration information of the one or more first network elements in which the positioning reference device exists. Alternatively, the one or more first network elements in which the positioning reference device exists may refer to registration information of the one or more first network elements in which the positioning reference device exists. Alternatively, the one or more first network elements in which the positioning reference device exists may refer to subscription information of the one or more first network elements in which the positioning reference device exists. Alternatively, the one or more first network elements in which the positioning reference device exists may refer to context information of the one or more first network elements in which the positioning reference device exists. This is not limited in this application.

In step S418, the first location management network element sends a first message to the first network element. The first message is used to request the first network element to provide information about the positioning reference device. The first network element receives the first message.

Specifically, the first message may include the first location information of the first device that is obtained by the first location management network element.

Alternatively, the first message may include the information about the reference area of the first device.

Alternatively, the first message may include the information about the neighboring reference area of the reference area of the first device.

Alternatively, the first message may include the information about the reference area of the first device, the information about the neighboring reference area of the reference area of the first device, and the first location information of the first device.

In step S420, the first network element determines (determine) one or more proper positioning reference devices based on the first message. The proper positioning reference device is denoted as a first positioning reference device, and the first positioning reference device is used for positioning measurement. The first positioning reference device belongs to the positioning reference devices. In other words, the positioning reference devices include the first positioning reference device.

In addition, there may be one or more first positioning reference devices. This is not limited in this application.

Alternatively, the "determine" may be replaced with "discover", "query", "search", "retrieve", and the like. This is not limited in this application.

Alternatively, the "positioning measurement" may be replaced with "positioning estimation (positioning estimate)", "positioning computation (positioning computation)", "location computation (location computation)", "location measurement (location measurement)", "location estimation (location estimate)", and the like. This is not limited in this application.

Specifically, the first network element may determine the first positioning reference device based on at least one piece of information in the first message.

For example, when the first network element determines the first positioning reference device based on the first location information of the first device, the first network element may determine that a positioning reference device whose distance from a first location is less than a threshold #3 is the first positioning reference device. The threshold #3 may be set by the first network element. This is not limited in this application.

Alternatively, when the first network element determines the first positioning reference device based on the information about the reference area of the first device, the first network element may determine that a positioning reference device in a determined area of a cell in which the first device is located is the first positioning reference device.

Alternatively, when the first device is located at an edge of at least one cell, the first network element may determine the first positioning reference device based on the information about the neighboring reference area of the reference area of the first device. In this case, the first network element may determine that a positioning reference device in a determined area of a cell adjacent to the first device is the first positioning reference device.

Optionally, the first network element may alternatively determine the first positioning reference device with reference to the first location information of the first device and/or the information about the reference area of the first device and/or the information about the neighboring reference area of the reference area of the first device, and the state of the positioning reference device registered with the first network element.

It should be understood that if a positioning reference device is moving and a moving speed reaches a threshold # 4, a positioning function of the positioning reference device is disabled, or positioning measurement information of the positioning reference device is inaccurate. In this case, the first network element does not choose the positioning reference device as the first positioning reference device to position the first device requiring high-precision positioning. If a positioning reference device is in a static state or a moving speed does not reach the threshold # 4, a positioning function of the positioning reference device is enabled. In this case, the first network element chooses the positioning reference device as the first positioning reference device, to assist in the positioning measurement for the first device. The threshold # 4 may be set by the first network element based on a positioning accuracy requirement of the first device. This is not limited in this application.

In step S422, the first network element sends a second message to the first location management network element. The second message includes the first positioning reference device determined by the first network element. The first location management network element receives the second message from the first network element.

Specifically, the second message includes information about the first positioning reference device. The information about the first positioning reference device may be related information of the first positioning reference device. The related information may be a part or all of registration information of the first positioning reference device, a part or all of subscription information, a part or all of configuration information, a part or all of context, or the like. This is not limited in this application.

Specifically, the information about the first positioning reference device may include identification information of the first positioning reference device. The identification information of the first positioning reference device may be a subscription permanent identifier (subscription permanent identifier, SUPI), a subscription concealed identifier (subscription concealed identifier, SUCI), a general public subscription identifier (generic public subscription identifier, GPSI), a permanent equipment identifier (permanent equipment identifier, PEI), an international mobile subscriber identity (international mobile subscriber identity, IMSI), or the like. This is not limited in this application.

Optionally, the identification information of the first positioning reference device may alternatively be a name that is named by using a character string and that uniquely distinguishes the first positioning reference device.

In step S424, the first location management network element sends a third message to the first positioning reference device. The third message may include identification information of the first device, a positioning method, QoS information, a positioning parameter, and the like. The first positioning reference device receives the third message from the first location management network element.

Optionally, the third message may further include the first location information of the first device.

Specifically, the positioning method includes one or more of the foregoing positioning methods, and may include one or more LTE positioning protocol (LTE positioning protocol, LPP) positioning methods and/or NR positioning protocol A (NR positioning protocol A, NRPPa) positioning methods, and the like.

Specifically, the LPP positioning method may include one or more of the following positioning methods:
a downlink time difference of arrival (downlink time difference of arrival, DL-TDOA) positioning measurement method, a downlink angle of departure (downlink angle of departure, DL-AOD) positioning measurement method, a multi-round-trip time (multi-round-trip time, Multi-RTT) positioning measurement method, an enhanced cell identification (enhanced cell identification, E-CID) positioning measurement method, an uplink time difference of arrival (uplink time difference of arrival, UL-TDOA) positioning measurement method, an uplink angle of arrival (uplink angle of arrival, UL-AoA) positioning measurement method, an assisted global navigation satellite system (assisting global navigation satellite system, A-GNSS) positioning measurement method, a sensor (sensor) positioning measurement method, a wireless local area network (wireless local area network, WLAN) positioning measurement method, a Bluetooth (Bluetooth) positioning measurement method, a terrestrial beacon system (terrestrial beacon system, TBS) positioning measurement method, and the like.

Specifically, the NRPPa includes one or more of the following positioning methods:
an NR enhanced cell identification (NR enhanced cell identification, NR E-CID) positioning measurement method, an observed time difference of arrival (observed time difference of arrival, OTDOA) positioning measurement method, and the like.

In step S426, the first positioning reference device performs positioning measurement processing and/or positioning computation processing to obtain one or more pieces of positioning measurement information and/or positioning estimation information and/or positioning computation information.

In step S428, the first positioning reference device sends fourth information to the first location management network element. The first location management network element receives the fourth information from the first positioning reference device.

Specifically, the fourth information may include at least one of the following:
the positioning measurement information of the first positioning reference device and/or second location information and/or positioning measurement information. The second location information indicates a location of the first device that is measured/estimated/computed by the first positioning reference device. The positioning measurement information is used for timing correction, timing calibration, timing differential, timing error correction, timing error calibration, timing error differential, timing adjustment, and the like. This is not limited in this application.

For example, the fourth information may be carried in an N1 message for transmission.

Alternatively, the fourth information may be carried in an N2 message for transmission.

Alternatively, the fourth information may be carried in an N2 message irrelevant to the first device for transmission.

In step S430, the first location management network element determines the location information of the first device based on the second location information of the first device and/or the positioning measurement information that are/is included in the fourth information.

Optionally, "determines the location information of the first device" may also be "obtains the location information of the first device", "computes the location information of the first device", or "estimates the location information of the first device". This is not limited in this application.

In this embodiment, at least one first positioning reference device that can assist the first location management network element in positioning is chosen to perform assisted positioning measurement on the first device, so as to obtain a plurality of measurement results of the first device. The results are summarized and computed to improve positioning accuracy of the first device.

In addition, to ensure that a positioning reference device that meets a requirement can be fully utilized, a second network element may send a notification message to a positioning reference device in idle state before the first network element determines one or more positioning reference devices that can perform the positioning measurement, so that the positioning reference device in idle state returns to a connected state and is to be chosen by the first network element.

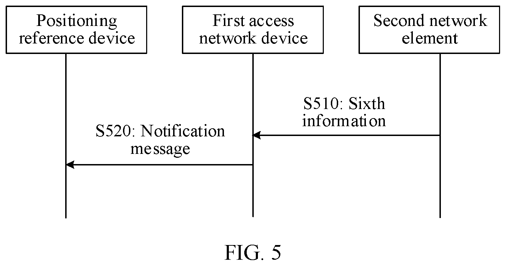

FIG. 5 is a schematic interactive diagram for notifying a positioning reference device in idle state to return to a connected state. In step S510, a second network element sends sixth information to a first access network device. The sixth information indicates that the first access network device notifies the positioning reference device to return to the connected state.

The second network element may include an access and mobility management function network element or a location management function network element that serves the first device. The first access network device is an access network device serving the first device.

Specifically, the sixth message may be carried in assistance data, assistance information control, assistance information, an N2 message, a system information block, or a positioning system information block.

Optionally, the sixth information further includes a sending periodicity, and the sending periodicity indicates a periodicity in which the first access network device sends a message indicating that the positioning reference device returns to the connected state.

In step S520, the first access network device sends a notification message to the positioning reference device in idle state, so that the positioning reference device in idle state returns to the connected state.

Specifically, the notification message may be an RRC message, a SIB message, a multicast message, a unicast message, a broadcast message, a paging message, or the like.

Optionally, the first access network device may further periodically send, based on the sending periodicity in the sixth information, a message used to notify the positioning reference device to return to the connected state.

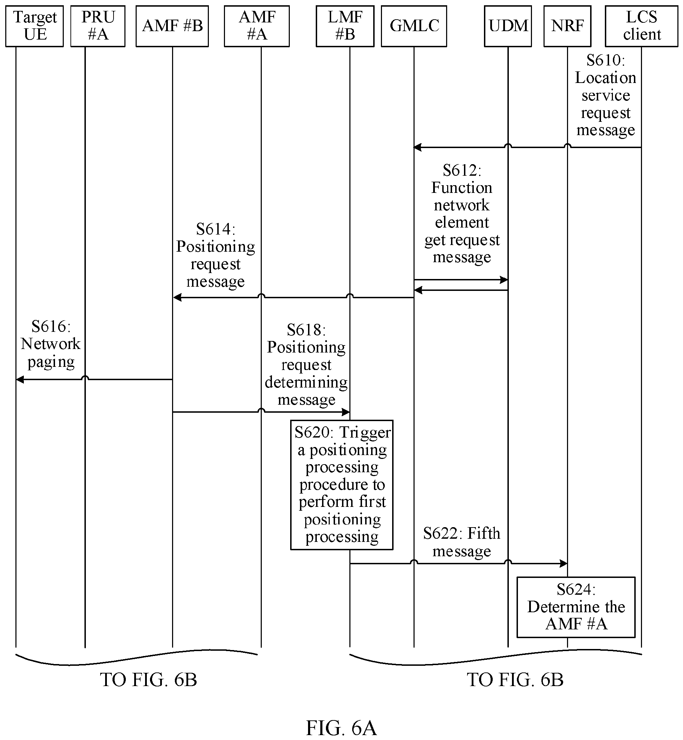

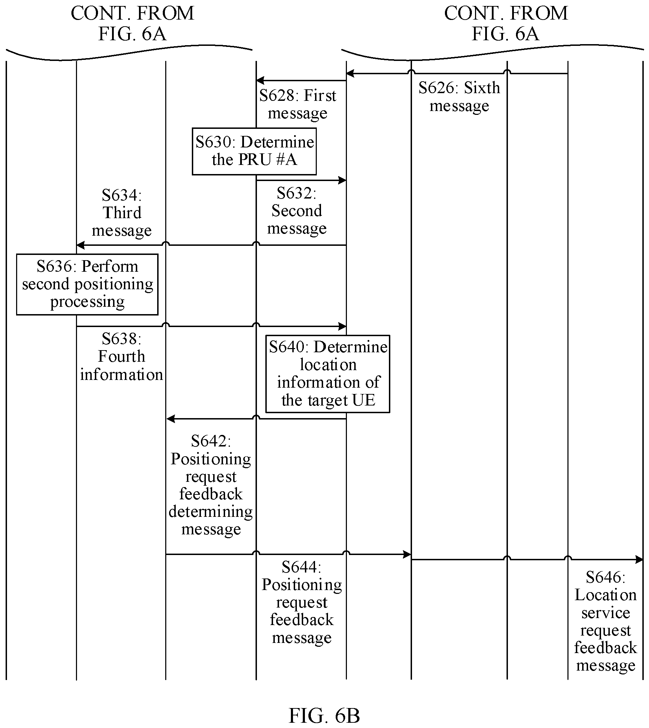

FIG. 6A and FIG. 6B are a possible embodiment. An example in which an LMF network element is used as a first location management network element, an AMF network element is used as a first network element, an NRF network element is used as a network repository network element, a PRU is used as a positioning reference device, and a target UE is used as a first device is used to provide detailed descriptions.

In step S610, an LCS client sends a location service request message "LCS Service Request" to a GMLC. The location service request message is used to request to determine location information of the target UE. The GMLC receives the location service request message from the LCS client.

Specifically, the location service request message includes an identifier of the target UE, required QoS information, supported geographical area description (geographical area description, GAD) information, and the like.

Specifically, an identifier of the target UE may be an SUPI, an SUCI, a GPSI, a PEI, an IMSI, or the like. This is not limited in this application.

Specifically, the QoS information may include precision information of a location measurement result, feedback duration information of the location measurement result, and the like. The precision information of the location measurement result includes a centimeter, a decimeter, a meter, and the like. The feedback duration information of the location measurement result includes whether a feedback needs to be provided immediately or whether the feedback may be provided after a period of time.

Specifically, the GAD information may be GPS location coordinates represented by using longitude and latitude.

In step S612, the GMLC sends a UE service function network element get request message "Nudm_UECM_Get Request" to the UDM. The request message is used to request to obtain a function network element serving the UE. The UDM receives the function network element request message from the GMLC, and feeds back an identifier of a required function network element that serves the UE.

Specifically, the request information includes the identifier of the target UE and a required function network element type. For example, the required function network element type is an AMF network element, denoted as an AMF network element #B.

In step S614, the GMLC sends a location positioning information request message "Namf_Location_ProvidePositioningInfo Request" to the AMF network element #B. The positioning request information is used to request to position the target UE. The AMF network element #B receives the positioning request information.

Specifically, the positioning request information includes the identifier of the target UE, the QoS information, a type identifier of the LCS client, and the like.

In step S616, if the AMF network element #B finds that the target UE is in idle state (CM-IDLE), the AMF network element #B triggers a network triggered service request procedure "Network Triggered Service Request", to page the target UE to return to a connected state (CM-CONNECTED).

In step S618, the AMF network element #B sends a location request determining message "Nlmf_Location_DetermineLocation Request" to an LMF network element that serves the target UE, denoted as an LMF network element #B. The LMF network element #B receives the location request determining message.

Specifically, the location request determining message includes the identifier of the target UE, an identifier of the AMF network element #B, the QoS information, the type identifier of the LCS client, and the like.

In step S620, the LMF network element #B triggers, based on the location request determining message, one or more LPP and/or NRPPa positioning processing procedures to perform first positioning processing on the target UE, to obtain one or more measurement values corresponding to the one or more positioning processing procedures, and obtain first location information of the target UE through computation. The positioning processing procedure may be a positioning processing procedure corresponding to any one of the foregoing positioning methods.

For example, the one or more measurement values may be carried in n N1 message notification "Namf_Communication_N1MessageNotify".

Alternatively, the measurement values may be carried in an N2 message notification "N2InfoNotify" .

Alternatively, the measurement values may be carried in a non-UE-related N2 message "NonUEN2MessageTransfer".

The N1 message notification, the N2 message notification, or the non-UE-related N2 message may further carry an identifier (for example, a GCI) of a cell in which the target UE is located, and may further carry identification information (GCI) of one or more neighboring cells adjacent to the cell in which the target UE is located, and the like.

In step S622, the LMF network element #B sends a fifth message to the NRF network element. The fifth message includes fifth information, and the fifth information is used to discover an AMF network element in which information about one or more PRUs exists, denoted as an AMF network element #A. The NRF network element receives the fifth message from the LMF network element #B.

The fifth message may be "Nnrf_NFDiscovery_Request Request", or may be another message having a same function, for example, a new message having a different name but the same function. This is not limited in this application.

Optionally, the fifth message may include information about a reference area of the target UE and/or information about a neighboring reference area of the reference area of the target UE. For the information about the reference area of the target UE and/or the information about the neighboring reference area of the reference area of the first device, refer to the foregoing descriptions. Details are not described herein again.

Specifically, the information about the reference area of the target UE and/or the information about the neighboring reference area of the reference area of the target UE are/is used to represent the reference area of the target UE. For a reference area of a device, refer to the foregoing descriptions. Details are not described herein again.

It should be understood that the fifth message may be used to query the AMF network element #A in the reference area.

In step S624, the NRF network element determines the AMF network element #A based on the fifth message. There may be one or more AMF network elements #A. This is not limited in this application.

Alternatively, the "determine" may be replaced with "discover", "query", "search", "retrieve", and the like. This is not limited in this application.

A message corresponding to "retrieval" may be "Nnrf_NFManagement_NFListRetrieval Request" or "Nnrf_NFManagement_NFListRetrieval Request", or may be another message having a same function, for example, a new message having a different message name but the same function. This is not limited in this application.

In step S626, the NRF network element sends a sixth message to the LMF network element #B. The sixth message may be a response message of the fifth message, and the sixth message may include information about the AMF network element #A. The LMF network element #B receives the sixth message from the NRF network element.

The sixth message may be an "Nnrf_NFDiscovery_Request Response", or may be another message having a same function, for example, a new message having a different message name but the same function. This is not limited in this application.

Specifically, the information about the AMF #A network element may include, for example, network function configuration information (NF profile) of the AMF network element #A. This is not limited in this application.

In step S628, the LMF network element #B sends a first message to the AMF network element #A. The first message is used to request the AMF network element #A to provide the information about the PRU. The AMF network element #A receives the first message.

Specifically, the first message may include the first location information of the target UE that is obtained by the LMF network element #B.

Alternatively, the first message may include the information about the reference area of the target UE.

Alternatively, the first message may include the information about the neighboring reference area of the reference area of the target UE.

In step S630, the AMF #A network element determines, based on the first message, one or more PRUs that can assist in positioning the target UE, denoted as a PRU #A. The PRU #A is used for positioning measurement.

In addition, there may be one or more PRUs #A. This is not limited in this application.

Alternatively, the "provide" may be replaced with "determine", "discover", "query", "search", "retrieve", and the like. This is not limited in this application.

Alternatively, the "positioning measurement" may be replaced with "positioning estimation (positioning estimate)", "positioning computation (positioning computation)", "location computation (location computation)", "location measurement (location measurement)", "location estimation (location estimate)", and the like. This is not limited in this application.

Specifically, the AMF network element #A may determine the PRU #A based on at least one message in the first message.

For example, when the AMF network element #A may determine the PRU #A based on the first location information of the target UE, the AMF network element #A may determine that a PRU whose relationship with the first location information meets a first condition is the PRU #A. This is not limited in this application. For an explanation of the first condition, refer to the foregoing descriptions. Details are not described herein again. Alternatively, when the AMF network element #A determines the PRU #A based on the information about the reference area of the target UE, the AMF network element #A may determine a proper PRU as the PRU #A based on a cell in which the target UE is located.

Alternatively, for example, when the target UE is at a cell edge, the AMF network element #A may determine a proper PRU #A based on the information about the neighboring reference area of the reference area of the target UE.

Optionally, the AMF #A network element may alternatively determine the PRU #A in combination with the first location information of the target UE and/or the information about the reference area of the target UE and/or the information about the neighboring reference area of the reference area of the target UE and a current state of a PRU registered with the AMF #A network element.

For example, it is assumed that the cell in which the target UE is located is a cell 1, and two neighboring cells of the cell of the target UE are a cell 2 and a cell 3. The LMF network element #B may receive identification information that is sent by the NRF network element and that is of an AMF network element #A with which one or more PRUs in the cell 1, the cell 2, and the cell 3 are registered.

Further, the AMF network element #A determines a proper PRU in the cell 1, the cell 2, and the cell 3 as the PRU #A based on current motion states of the PRUs registered with the AMF network element #A.

In step S632, the AMF network element #A sends a second message to the LMF network element #B. The second message may include the PRU #A determined by the AMF network element #A. The LMF network element #B receives the second message from the AMF network element #A.

Specifically, the second message includes related information of the PRU #A. The related information may be identification information of the PRU #A, a part or all of configuration information, a part or all of context information, a part or all of registration information, a part or all of subscription information, or the like. This is not limited in this application.

Specifically, the identification information of the PRU #A may be a subscription permanent identifier (subscription permanent identifier, SUPI), a subscription concealed identifier (subscription concealed identifier, SUCI), a general public subscription identifier (generic public subscription identifier, GPSI), a permanent equipment identifier (permanent equipment identifier, PEI), an international mobile subscriber identity (international mobile subscriber identity, IMSI), or the like. This is not limited in this application.

Optionally, the identification information of the PRU #A may alternatively be a name that is named by using a character string and that uniquely distinguishes the PRU #A.

In step S634, the LMF network element #B sends a third message to the PRU #A. The third message may include the identification information, a positioning method, the QoS information, and the like of the target UE. The PRU #A receives the third message from the LMF network element #B.

Optionally, the third message may further include the first location information of the target UE.

Specifically, the positioning method includes one or more LTE positioning protocol (LTE positioning protocol, LPP) positioning methods and/or NR positioning protocol A (NR positioning protocol A, NRPPa) positioning methods, and the like.

Specifically, the LPP positioning method may include one or more of the following positioning methods:
a downlink time difference of arrival (downlink time difference of arrival, DL-TDOA) positioning method, a downlink angle of departure (downlink angle of departure, DL-AOD) positioning method, a multi-round-trip time (multi-round-trip time, Multi-RTT) positioning method, an enhanced cell identification (enhanced cell identification, E-CID) positioning method, an uplink time difference of arrival (uplink time difference of arrival, UL-TDOA) positioning method, an uplink angle of arrival (uplink angle of arrival, UL-AoA) positioning method, an assisted global navigation satellite system (assisting global navigation satellite system, A-GNSS) positioning method, a sensor (sensor) positioning method, a wireless local area network (wireless local area network, WLAN) positioning method, a Bluetooth (Bluetooth) positioning method, a terrestrial beacon system (terrestrial beacon system, TBS) positioning method, and the like.

Specifically, the NRPPa positioning method may include one or more of the following positioning methods:
an NR enhanced cell identification (NR enhanced cell identification, NR E-CID) positioning method, an observed time difference of arrival (observed time difference of arrival, OTDOA) positioning method, and the like.

In step S636, the PRU #A performs second positioning processing based on the third message, to obtain second location information and/or positioning measurement information of the target UE. The positioning measurement information may include one or more positioning measurement values.

In step S638, the PRU #A sends fourth information to the LMF network element #B. The LMF network element #B receives the fourth information from the PRU #A.

Specifically, the fourth information includes at least one of the following:
the second location information and/or the positioning measurement information obtained by performing the second positioning processing by the PRU #A. The second location information may indicate a location of the target UE that is measured/estimated/computed by the PRU #A, and the positioning measurement information may be used for timing correction, timing calibration, timing differential, timing error correction, timing error calibration, timing error differential, timing adjustment, and the like. This is not limited in this application.

For example, the fourth information may be carried in the N1 message notification "Namf_Communication_N1MessageNotify".

Alternatively, the fourth information may be carried in the N2 message notification "N2InfoNotify" .

Alternatively, the fourth information may be carried in the N2 message "NonUEN2MessageTransfer" irrelevant to the PRU #A.

In step S640, the LMF network element #B determines the location information of the target UE based on the second location information and/or the positioning measurement information that are/is of the target UE and that are/is included in the fourth information.

Optionally, "determines the location information of the target UE" may also be "obtains the location information of the target UE", "computes the location information of the target UE", or "estimates the location information of the target UE". This is not limited in this application.

For example, it is assumed that actual location coordinates of the target UE are (4, 4), and the first location information is (5, 5). If PRUs #A determined according to the foregoing method are a PRU #A1, a PRU #A2, and a PRU #A3, location information corresponding to the PRUs is respectively (4, 6), (6, 4), and (3, 3). The PRU #A1, the PRU #A2, and the PRU #A3 separately perform the second positioning processing on the target UE, and obtained second location information is (4, 5), (5, 4), and (4, 3). The PRU #A1, the PRU #A2, and the PRU #A3 separately perform the positioning measurement to obtain timing correction information, and finally perform summarization processing based on the first location information of the target UE, the second location information, and the timing correction information, to obtain location information of the target UE: (4.5, 4.25). The finally obtained location information is more accurate and has higher positioning accuracy than the first location information.

In this embodiment, at least one PRU #A is chosen to perform the assisted positioning measurement on the target UE, to obtain a plurality of measurement results of the target UE. The results are summarized and computed to improve positioning accuracy of the target UE.

In step S642 and step S644, the LMF network element #B sends the location information of the target UE to the LCS client sequentially via the AMF network element #B and the GMLC.

In addition, the LCS client initiates a positioning request, and the target UE can also actively request positioning.

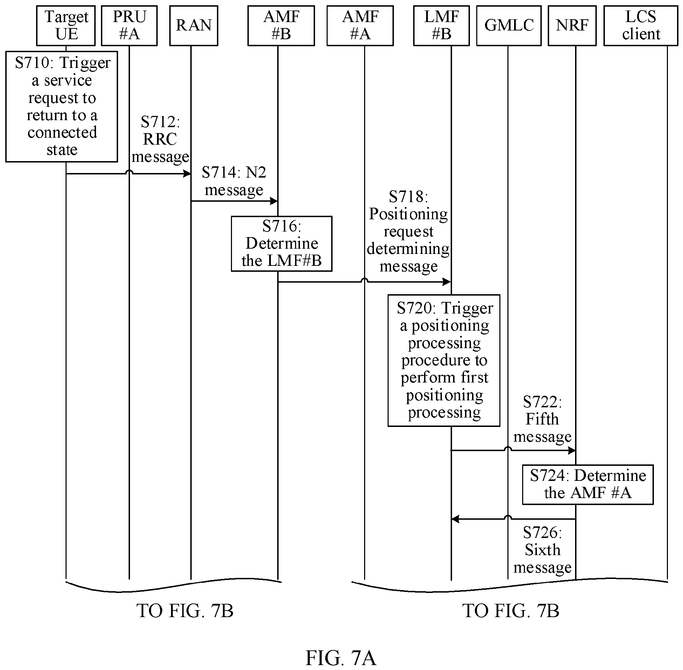

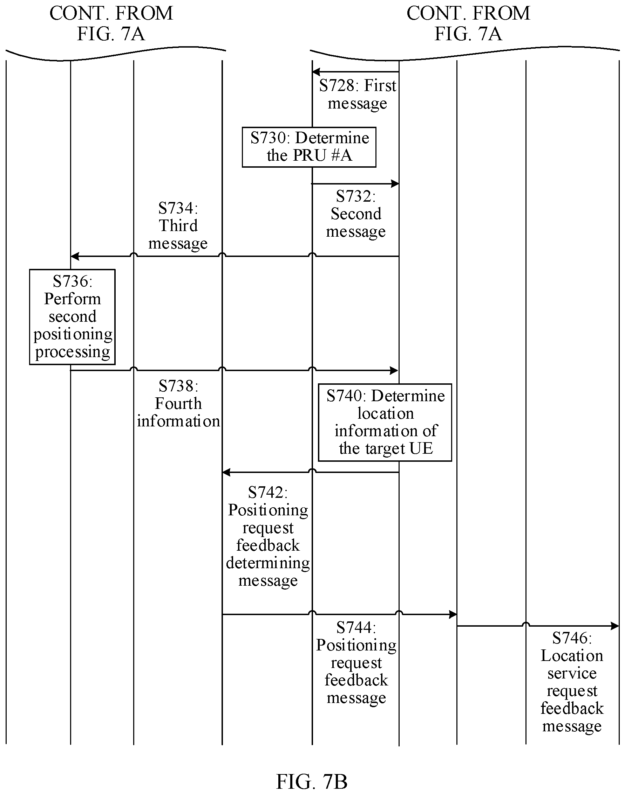

As shown in FIG. 7A and FIG. 7B, in step S710, if a target UE is in idle state, the target UE triggers a service request to return to a connected state.

In step S712, the target UE sends uplink radio resource control (radio resource control, RRC) information to a RAN. The information includes non-access stratum protocol data unit (non-access stratum protocol data unit, NAS PDU) information. The RAN receives the information from the target UE.

Specifically, the NAS PDU information includes an identifier of the target UE, positioning request information initiated by the target UE, and the like.

For example, the positioning request information initiated by the target UE may be (mobile originated location request, MO-LR) information.

In step S714, the RAN sends the uplink RRC information to an AMF network element #B by using an N2 message. The AMF network element #B receives the uplink RRC information from the RAN.

In step S716, the AMF network element #B chooses an LMF network element #B based on information about a reference area of the target UE and/or information about a neighboring reference area of the reference area.

For steps S718 to S746, refer to steps S618 to S646. Details are not described herein again.

The foregoing embodiment describes a method for an AMF network element to manage a PRU to assist in positioning. An AMF network element #A dynamically choose a PRU #A based on positioning accuracy requirements of different positioning services.

Specifically, that the AMF network element manages the PRU may be storing the information about the PRU in the AMF network element. For example, the AMF network element stores the information about the PRU, for example, a part or all of registration information of the PRU, a part or all of subscription information of the PRU, a part or all of a context of the PRU, a part or all of configuration information of the PRU, or the like.

The following describes a method for an LMF network element to manage a PRU to assist in positioning.

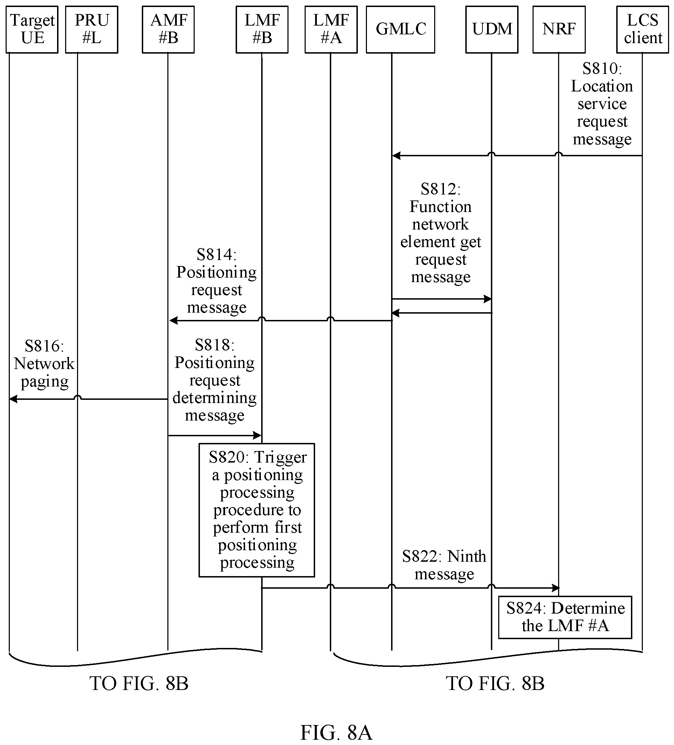

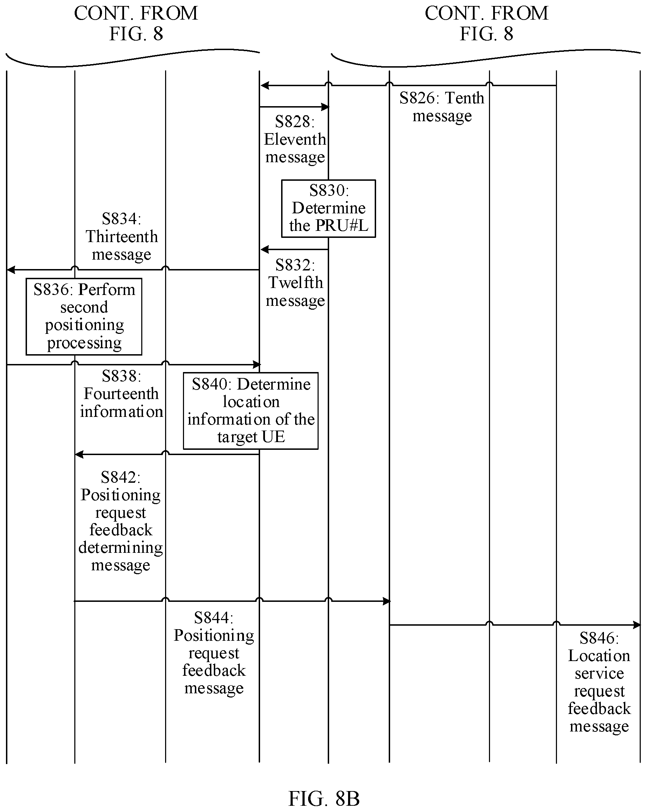

As shown in FIG. 8A and FIG. 8B, for steps S810 to S820, refer to steps S610 to S620. Details are not described herein again.

In step S822, the LMF network element #B sends a ninth message to an NRF network element. The ninth message is used to request to query an LMF network element in which a PRU exists. The NRF network element receives the ninth message from the LMF network element #B.

Alternatively, the "request" may be replaced with "indicate", and the "query" may be replaced with "discover". This is not limited in this application.

Optionally, the ninth message may include information about a reference area of the target UE and/or information about a neighboring reference area of the reference area of the target UE. In this case, the ninth message may be used to request to query a network element in which a PRU exists in the reference area.

Specifically, the information about the reference area of the target UE is used to represent the reference area of the target UE.

Specifically, the information about the reference area may be information about a location covered by an access network device that currently serves the target UE, and the location information may include an identifier of a cell in which the target UE is currently located. Alternatively, the information about the reference area may be information about a location area in which the target UE is covered by a target access network device of the target UE, and the location area information includes at least one of the following: a CGI, an identifier of the access network device, an identifier of a tracking area, and an identifier of a PLMN. In addition, GPS geographical location information, a sector identifier, a PCI, an antenna identifier, a DU identifier, a CU identifier, and the like may be further included.

The identifier of the access network device may be a gNB ID, an NG-RAN ID, or the like, and the identifier of the tracking area may be a TAI, a TAC, or the like.

Specifically, information about a neighboring location of the reference area may be information about the neighboring location of the location covered by the access network device that currently serves the target UE, and the information about the neighboring location may include an identifier of a neighboring cell of the cell in which the target UE is located. Alternatively, the information about the reference area may be neighboring information of a location of the target UE covered by the target access network device of the target UE, and the information about the neighboring location includes at least one of the following: a CGI of a neighboring cell, an identifier of a neighboring access network device, an identifier of a neighboring tracking area, and an identifier of a neighboring PLMN. In addition, the GPS geographical location information, a neighboring sector identifier, a neighboring PCI, a neighboring antenna identifier, a neighboring DU identifier, a neighboring CU identifier, and the like may be further included.

The identifier of the access network device may be a gNB ID, an NG-RAN ID, or the like, and the identifier of the tracking area may be a TAI, a TAC, or the like.

Optionally, a network element type to which the network element belongs may also be queried. To be specific, the ninth information may be used to request to query a network element whose network element type is an LMF and with which a PRU is registered in the reference area, denoted as an LMF #A.

In step S824, the NRF network element determines the LMF network element #Abased on the ninth message. There may be one or more LMF network elements #A. This is not limited in this application.

The ninth message may be "Nnrf_NFDiscovery_Request Request", or may be another message having a same function, for example, a new message having a different name but the same function. This is not limited in this application.

Alternatively, the "determine" may be replaced with "discover", "query", "search", "retrieve", and the like. This is not limited in this application.

Information corresponding to "retrieval" may be "Nnrf_NFManagement_NFListRetrieval Request" or information "Nnrf_NFManagement_NFListRetrieval Request", or may be another message having a same function, for example, a new message having a different message name but the same function. This is not limited in this application.

In step S826, the NRF network element sends a tenth message to the LMF network element #B. The tenth message may be a feedback message of the ninth message, and the tenth information includes related information of the found LMF network element A. For example, the related information may include identification information of the LMF network element A and a part or all of network configuration information of the LMF network element A. The LMF network element #B receives the tenth message from the NRF network element.

The tenth message may be "Nnrf_NFDiscovery_Request Response", or may be another message having a same function, for example, a new message having a different name but the same function. This is not limited in this application.

Alternatively, the "feedback" may be replaced with "response". This is not limited in this application.

Specifically, the related information of the LMF network element A may be network function configuration information or the like of the LMF network element A, for example, NF profile information of the LMF network element A. This is not limited in this application.

In step S828, the LMF #B sends an eleventh message to the LMF #A. The eleventh message is used to request the LMF #A to determine one or more PRUs that can assist in positioning the target UE, where the PRU is denoted as a PRU #L. The PRU #L is used for positioning measurement and/or positioning measurement on the target UE. The LMF #A receives the eleventh message.

Similarly, the "determine" may be replaced with "discover", "query", "search", and the like. This is not limited in this application.

Alternatively, the "positioning measurement" may be replaced with "positioning estimation", "positioning computation", "positioning computation", "location measurement", "location estimation", and the like. This is not limited in this application.

Specifically, the eleventh message may include first location information of the target UE that is obtained by the LMF #B.

Alternatively, the eleventh message may include the information about the reference area of the target UE.

Alternatively, the eleventh message may include the information about the neighboring reference area of the reference area of the target UE.

In step S830, the LMF network element A determines the PRU #L based on the eleventh message. There may be one or more PRUs #L. This is not limited in this application.

Specifically, the LMF network element A may determine the PRU #L based on at least one piece of information in the eleventh message.

For example, when the LMF network element A may determine the PRU #L based on the first location information of the target UE, the LMF network element A may determine that a PRU whose relationship with the first location information meets a first condition is the PRU #L. For an explanation of the first condition, refer to the foregoing descriptions. Details are not described herein again. This is not limited in this application.

Alternatively, when the LMF network element A may determine the PRU #L based on the information about the reference area of the target UE, the LMF network element A may determine that a PRU in the cell of the target UE is the PRU #L.

Alternatively, when the target UE is at a cell edge, the LMF #A may determine the PRU #L based on the information about the neighboring reference area of the reference area of the target UE.

Optionally, the LMF network element A may alternatively determine the PRU #L based on the first location information of the target UE and/or the information about the reference area of the target UE and/or the information about the neighboring reference area of the reference area and a state of the PRU registered with the LMF network element A.

In step S832, the LMF #A sends a twelfth message to the LMF#B. The twelfth message indicates the PRU #L determined by the LMF network element A. The LMF network element #B receives the twelfth message from the LMF network element A.

Specifically, there may be one or more PRUs #L. This is not limited in this application.

Specifically, the twelfth message includes related information of the PRU #L. The related information may be identification information of the PRU #L, a part or all of the registration information, a part or all of the subscription information, a part or all of the context information, a part or all of the configuration information, or the like. This is not limited in this application.

Specifically, the identification information of the PRU #L may be an SUPI, an SUCI, a GPSI, a PEI, an IMSI, or the like. This is not limited in this application.

Optionally, the identification information of the PRU #L may alternatively be a name that is named by using a character string and that uniquely distinguishes the PRU.

In step S834, the LMF network element #B sends a thirteenth message to an AMF of the PRU #L. After receiving the thirteenth message, the AMF of the PRU #L forwards the message to the PRU #L. The thirteenth message may include identification information of the target UE. The PRU #L receives the thirteenth message from the LMF network element #B.

In addition, the thirteenth message may further include positioning processing information. The positioning processing information may include a positioning method, a positioning processing precision requirement, and the like.

Optionally, the thirteenth message may further include the obtained first location information of the target UE.

Specifically, the positioning method may include one or more LPP and/or NRPPa positioning methods, and the like.

Specifically, the LPP positioning method includes one or more of the following positioning methods:
a DL-TDOA positioning measurement method, a DL-AOD positioning measurement method, a multi-RTT positioning measurement method, an E-CID positioning measurement method, a UL-TDOA positioning measurement method, a UL-AoA positioning measurement method, an A-GNSS positioning measurement method, a sensor positioning measurement method, a WLAN positioning measurement method, a Bluetooth positioning measurement method, a TBS positioning measurement method, and the like.

Specifically, the NRPPa positioning method includes one or more of the following positioning methods:
an NR E-CID positioning measurement method and an OTDOA positioning measurement method.

In step S836, the PRU #L performs second positioning processing on the target UE based on the thirteenth message, to obtain one piece of second location information and/or one or more measurement values.

In step S838, the PRU #L first sends fourteenth information to the AMF network element of the PRU #L. After receiving the fourteenth information, the AMF of the PRU #L forwards the fourteenth information to the LMF network element #B. The fourteenth information may include second location measurement information and/or positioning measurement information that are/is obtained by performing the second positioning processing on the target UE by the PRU #L. The LMF#B receives the fourteenth information from the PRU #L.

For example, the second location measurement information and/or the positioning measurement information may be carried in an N1 message notification "Namf_Communication_N1MessageNotify".

Alternatively, the second location measurement information and/or the positioning measurement information may be carried in an N2 message notification "N2InfoNotify".

Alternatively, the second location measurement information and/or the positioning measurement information may be carried in an N2 message "NonUEN2MessageTransfer" irrelevant to the target UE.

In step S840, the LMF network element #B determines the location information of the target UE based on the received second location measurement information and/or the received positioning measurement information.

In step S842 and step S844, the LMF network element #B sends the location information of the target UE to the LCS client sequentially via the AMF network element #B and the GMLC.

In this embodiment, at least one PRU #L that can assist in positioning is properly chosen to perform assisted positioning measurement on the target UE, to obtain a plurality of measurement results of the target UE. The results are summarized and computed to improve positioning accuracy of the target UE.

In addition, the LCS client initiates a positioning request, and the target UE can also actively request positioning.

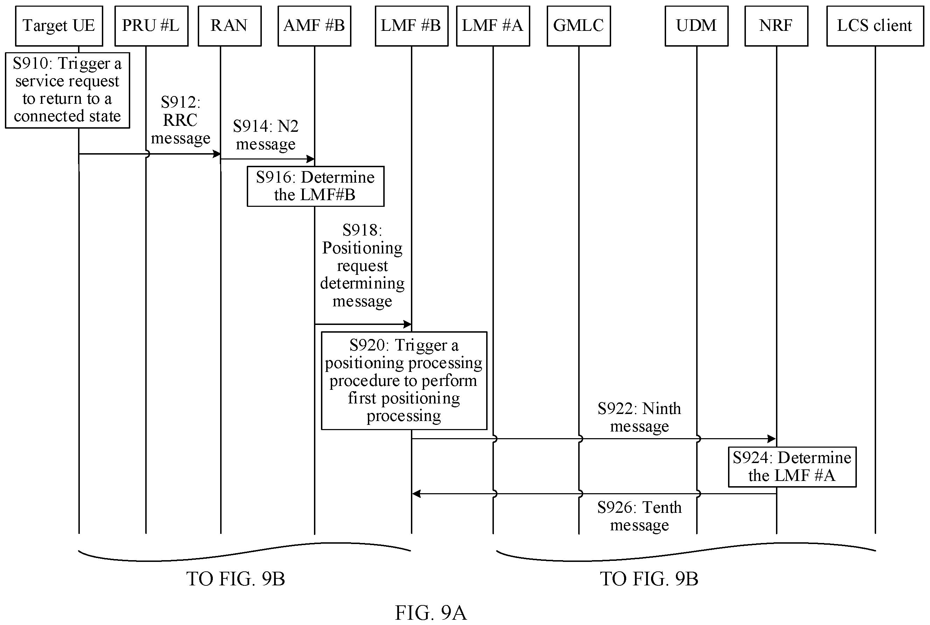

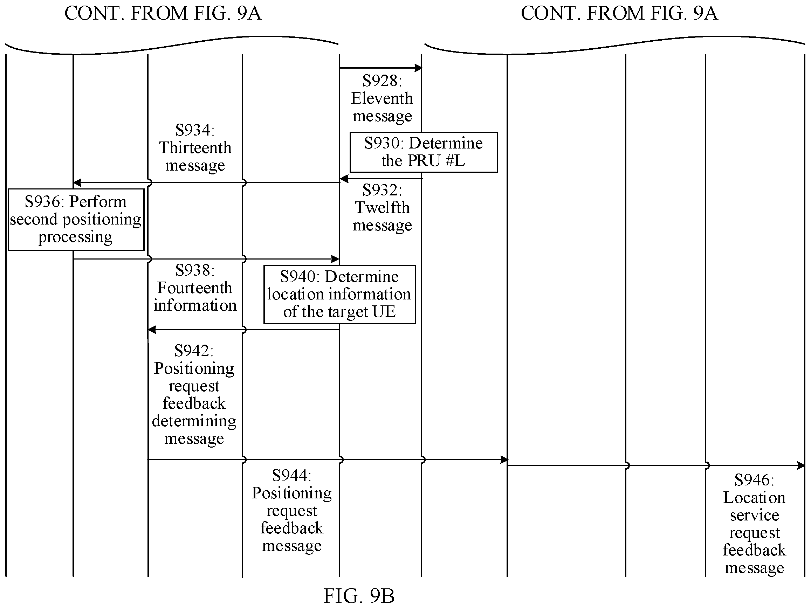

As shown in FIG. 9A and FIG. 9B, for steps S910 to S920, refer to steps S710 to S720.

For steps S922 to S946, refer to steps S822 to S846.

The foregoing describes in detail a method that is provided in this application and that is used to choose a PRU to position a UE. The following describes a communication apparatus according to this application.

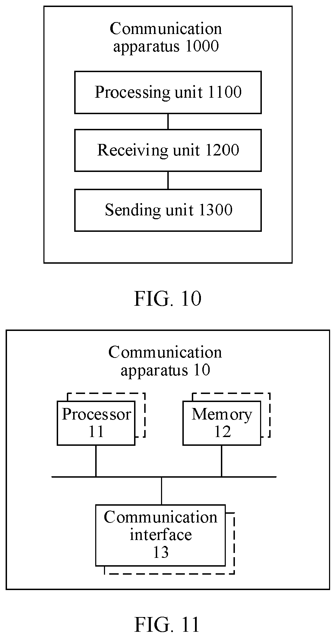

FIG. 10 is a schematic block diagram of a communication apparatus according to this application. As shown in FIG. 10, the communication apparatus 1000 includes a processing unit 1100, a receiving unit 1200, and a sending unit 1300.

Optionally, the communication apparatus 1000 may correspond to the first network element in embodiments of this application.

In this case, the units of the communication apparatus 1000 are configured to implement the following functions:

The receiving unit 1200 is configured to receive a first message from a first location management network element. The first message is used to request the first network element to provide information about a positioning reference device, information about one or more positioning reference devices exists in the first network element, and the positioning reference device is used for positioning measurement.

The processing unit 1100 is configured to determine one or more first positioning reference devices based on the first message.

The sending unit 1300 is configured to send information about the first positioning reference device to the first location management network element.

The first message includes at least one of the following information:
information about a reference area of a first device, information about a neighboring reference area of the reference area of the first device, and first location information of the first device, where the first device is a positioned device.

Optionally, in an embodiment, the processing unit 1100 further determines the one or more first positioning reference devices based on the first message and/or a state of the one or more positioning reference devices.

The state of the one or more positioning reference devices includes:
the positioning reference device changing from static to mobile, moving, disabling the positioning function, changing from mobile to static, static, enabling the positioning function, or having a moving speed greater than a value, a moving speed less than a value, a moving speed equal to a value, or a moving speed belonging to or not belonging to a range, and the like.

Optionally, in an embodiment, the receiving unit 1200 is configured to receive first information from the first positioning reference device. The first information indicates a capability of the positioning reference device.

Optionally, in an embodiment, the receiving unit 1200 is further configured to obtain information about the capability of the positioning reference device from subscription information of the positioning reference device. Herein, the first network element may determine whether the positioning reference device has a positioning capability.

Optionally, in an embodiment, the receiving unit 1200 is configured to receive second information from the positioning reference device. The second information indicates a state of the positioning reference device.

Optionally, in an embodiment, the sending unit 1300 is configured to send third information to the positioning reference device. The third information indicates that the positioning reference device reports the state.

Optionally, in an embodiment, the receiving unit 1200 is configured to obtain, from the subscription information of the positioning reference device, information about whether the positioning reference device is movable. If the positioning reference device is movable, the receiving unit 1200 needs to obtain the state of the positioning reference device.

Optionally, in an embodiment, the sending unit 1300 is configured to send an eighth message to a network repository network element. The eighth message indicates that the positioning reference device exists in the first network element. Herein, when the first network element determines that the first positioning reference device has the positioning capability, the sending unit 1300 sends the eighth message to the network repository network element to update network configuration information of the first network element, so that the network repository network element can find the first network element in which the positioning reference device exists.

Optionally, in an embodiment, the receiving unit 1200 is configured to receive fourth information of the first positioning reference device. The fourth information includes second location information and/or positioning measurement information, the second location information indicates a location of the first device that is measured by the first positioning reference device, and the positioning measurement information is used for timing correction. The sending unit 1300 sends the fourth information to the first location management network element, so that the first location management network element determines location information of the positioning reference device or the first device.

Optionally, in an embodiment, the second location information may be at least one of the following information:
the positioning measurement information, positioning estimation information, positioning computation information, location measurement information, location estimation information, location computation information, calibration information, timing error information, differential information, correction information, differential calibration information, and the like that are obtained by the first positioning reference device by performing positioning measurement on the first device.

Optionally, in an embodiment, the sending unit 1300 is configured to send a paging message to the positioning reference device. The paging message is used to page the positioning reference device in idle state.

Optionally, in an embodiment, the sending unit 1300 may further be configured to send a first indication to an access network device. The first indication is used to notify the positioning reference device to return to a connected state.

In the foregoing implementations of the units, the receiving unit 1200 and the sending unit 1300 may alternatively be integrated into one transceiver unit, to have both a receiving function and a sending function. This is not limited in this application.

In embodiments of the communication apparatus 1000 corresponding to a second network element, the processing unit 1100 is configured to perform processing and/or operations implemented inside the second network element other than sending and receiving actions. The receiving unit 1200 is configured to perform the receiving action, and the sending unit 1300 is configured to perform the sending action.

Optionally, the communication apparatus 1000 may correspond to the positioning reference device in embodiments of this application.

In this case, the units of the communication apparatus 1000 are configured to implement the following functions:

The receiving unit 1200 is configured to receive a third message from a first network element. The third message is used to request the processing unit 1100 to perform positioning measurement on a first device.

The sending unit 1300 is configured to send fourth information to the first network element. The fourth information includes second location information and/or positioning measurement information, the second location information indicates a location of the first device that is measured by the first positioning reference device, and the positioning measurement information is used for timing correction.

Optionally, in an embodiment, the second location information may be at least one of the following information:
the positioning measurement information, positioning estimation information, positioning computation information, location measurement information, location estimation information, location computation information, calibration information, timing error information, differential information, correction information, differential calibration information, and the like that are obtained by the positioning reference device by performing positioning measurement on the first device.

Optionally, in an embodiment, the sending unit 1300 is configured to send first information to the first network element. The first information indicates a capability of the positioning reference device.

Optionally, in an embodiment, the sending unit 1300 is configured to send second information to the first network element. The second information indicates a state of the first positioning reference device.

Optionally, in an embodiment, the receiving unit 1200 is configured to receive third information from the first network element. The third information indicates that the first positioning reference device reports the state.

Optionally, in an embodiment, the receiving unit 1200 is configured to receive a paging message from the first network element. The paging message is used to page a positioning reference device in idle state.

In the foregoing implementations of the units, the receiving unit 1200 and the sending unit 1300 may alternatively be integrated into one transceiver unit, to have both a receiving function and a sending function. This is not limited herein.

In embodiments of the communication apparatus 1000 corresponding to the positioning reference device in this application, the processing unit 1100 is configured to perform processing and/or operations implemented inside the positioning reference device other than sending and receiving actions. The receiving unit 1200 is configured to perform the receiving action, and the sending unit 1300 is configured to perform the sending action.

Optionally, the communication apparatus 1000 may correspond to the first location management network element in embodiments of this application.

In this case, the units of the communication apparatus 1000 are configured to implement the following functions:

The sending unit 1300 is configured to send a fifth message to a network repository network element. The fifth message includes fifth information, the fifth information is used to query a first network element in which a positioning reference device exists, and the positioning reference device is used for positioning measurement.

The receiving unit 1200 is configured to receive information that is from the network repository network element and that is about one or more network elements in which the positioning reference device exists. Herein, the first location management network element may obtain first network elements that are preliminarily screened out by the network repository network element and in which the positioning reference device exists.

Optionally, in an embodiment, the second message further includes at least one of the following information:
information about a reference area of a first device and/or information about a neighboring reference area of the reference area of the first device, where the first device is a positioned device.

Optionally, in an embodiment, the receiving unit 1200 is configured to receive a seventh message. The seventh message is used to request location information of the positioning reference device or the first device, is used to request to determine the location information of the positioning reference device or the first device, or is used to provide the location information of the positioning reference device or the first device.

Optionally, in an embodiment, the sending unit 1300 is configured to send a first message to the first network element. The first message is used to request the first network element to provide information about the positioning reference device.

Optionally, in an embodiment, the first message further includes at least one of the following information:
the information about the reference area of the first device, the information about the neighboring reference area of the reference area of the first device, and first location information of the first device.

Optionally, in an embodiment, the first network element includes an access and mobility management function network element or a location management function network element.

In embodiments of the communication apparatus 1000 corresponding to the first location management network element, the processing unit 1100 is configured to perform processing and/or operations implemented inside the first location management network element other than sending and receiving actions. The receiving unit 1200 is configured to perform the receiving action, and the sending unit 1300 is configured to perform the sending action.

Optionally, the communication apparatus 1000 may correspond to the network repository network element in embodiments of this application.

In this case, the units of the communication apparatus 1000 are configured to implement the following functions:

The receiving unit 1200 is configured to receive a fifth message from a first location management network element. The fifth message includes fifth information, the fifth information is used to discover a first network element in which a positioning reference device exists, and the positioning reference device is used for positioning measurement.

The sending unit 1300 is configured to send, to a first location management function network element, information about one or more first network elements in which the positioning reference device exists. Herein, the network repository network element may preliminarily screen out the first network elements in which the positioning reference device exists.

Optionally, in an embodiment, the fifth message further includes at least one of the following information:
information about a reference area of a first device and/or information about a neighboring reference area of the reference area of the first device, where the first device is a positioned device.

In embodiments of the communication apparatus 1000 corresponding to the network repository network element, the processing unit 1100 is configured to perform processing and/or operations implemented inside the network repository network element other than sending and receiving actions. The receiving unit 1200 is configured to perform the receiving action, and the sending unit 1300 is configured to perform the sending action.

Optionally, the communication apparatus 1000 may correspond to the second network element in embodiments of this application.

In this case, the units of the communication apparatus 1000 are configured to implement the following functions:

The sending unit 1300 is configured to send sixth information to a first access network device. The sixth information indicates that the first access network device notifies a positioning reference device to return to a connected state, and the positioning reference device is used for positioning measurement.

Optionally, in an embodiment, the first access network device is an access network device serving a first device, and the first device is a positioned device.

Optionally, in an embodiment, the sixth information further includes:
a sending periodicity, where the sending periodicity indicates a periodicity in which the first access network device sends a message indicating that the positioning reference device returns to the connected state.

Optionally, in an embodiment, the sixth information may be carried in assistance data, assistance information control, assistance information, an N2 message, a system information block, or a positioning system information block.

Optionally, in an embodiment, the receiving unit 1200 is configured to receive a seventh message. The seventh message is used to request location information of the positioning reference device or the first device, is used to request to determine the location information of the positioning reference device or the first device, or is used to provide the location information of the positioning reference device or the first device.

Optionally, in an embodiment, the second network element includes an access and mobility management function network element or a location management function network element.

Optionally, in an embodiment, the second network element is a network element serving the first device. Therefore, all first positioning reference devices in idle state near the first device are configured to perform positioning measurement on the first device, to improve positioning accuracy of the first device.

In embodiments of the communication apparatus 1000 corresponding to a first network element, the processing unit 1100 is configured to perform processing and/or operations implemented inside the first network element other than sending and receiving actions. The receiving unit 1200 is configured to perform the receiving action, and the sending unit 1300 is configured to perform the sending action.

Optionally, the communication apparatus 1000 may correspond to the first access network device in embodiments of this application.

In this case, the units of the communication apparatus 1000 are configured to implement the following functions:

The receiving unit 1200 is configured to receive sixth information from a first network element. The sixth information indicates that the first access network device notifies a positioning reference device to return to a connected state, and the positioning reference device is used for positioning measurement.

Optionally, in an embodiment, the first access network device is an access network device serving a first device, and the first device is a positioned device.

Optionally, in an embodiment, the sixth information further includes:
a sending periodicity, where the sending periodicity indicates a periodicity in which the first access network device sends a message indicating that the positioning reference device returns to the connected state.

Optionally, in an embodiment, the sending unit 1300 is further configured to periodically broadcast the sixth information. By periodically broadcasting the sixth information, overheads of signaling sent by a second network element to the receiving unit 1200 each time are reduced.

Optionally, in an embodiment, the sixth information may be carried in assistance data, assistance information control, assistance information, an N2 message, a system information block, or a positioning system information block.

Optionally, in an embodiment, the second network element includes an access and mobility management function network element or a location management function network element.

Optionally, in an embodiment, the access and mobility management function network element is an access and mobility management function network element serving the first device.

In embodiments of the communication apparatus 1000 corresponding to the first access network device, the processing unit 1100 is configured to perform processing and/or operations implemented inside the first access network device other than sending and receiving actions. The receiving unit 1200 is configured to perform the receiving action, and the sending unit 1300 is configured to perform the sending action.

FIG. 11 is a schematic diagram of a structure of a communication apparatus according to this application. As shown in FIG. 11, the communication apparatus 10 includes: one or more processors 11, one or more memories 12, and one or more communication interfaces 13. The processor 11 is configured to control the communication interface 13 to receive and receive a signal. The memory 12 is configured to store a computer program. The processor 11 is configured to invoke the computer program from the memory 12, and run the computer program, to enable the communication apparatus 10 to perform processing performed by a corresponding network element or device (for example, the first network element, the second network element, the first location management network element, the network repository network element, and the first positioning reference device) in the method embodiments of this application.

For example, the processor 11 may have functions of the processing unit 1100 shown in FIG. 10, and the communication interface 13 may have functions of the receiving unit 1200 and/or the sending unit 1300 shown in FIG. 10. Specifically, the processor 11 may be configured to perform processing or operations performed inside the corresponding network element, and the communication interface 13 is configured to perform sending operations and/o receiving operations performed by the corresponding network element.

In an implementation, the communication apparatus 10 may be the corresponding network element or device in the method embodiments. In this implementation, the communication interface 13 may be a transceiver. The transceiver may include a receiver and/or a transmitter. Optionally, the processor 11 may be a baseband apparatus, and the communication interface 13 may be a radio frequency apparatus.

In another implementation, the communication apparatus 10 may be a chip (or a chip system) mounted in the corresponding network element or device. In this implementation, the communication interface 13 may be an interface circuit or an input/output interface.

In FIG. 11, a dashed box behind a component (for example, the processor, the memory, or the communication interface) indicates that there may be more than one component.

Optionally, the memory and the processor in the foregoing apparatus embodiments may be physically independent units, or the memory may be integrated into the processor. This is not limited in this application.

It should be understood that the "corresponding network element or device" refers to any network element or device in the first network element, the second network element, the first location management network element, the network repository network element, and the first positioning reference device in embodiments.

In addition, this application further provides a computer-readable storage medium. The computer-readable storage medium stores computer instructions. When the computer instructions are run on a computer, an operation and/or processing performed by a corresponding network element in the method embodiments of this application are/is performed.

In addition, this application further provides a computer program product. The computer program product includes computer program code or instructions. When the computer program code or the instructions are run on a computer, an operation and/or processing performed by a corresponding network element in the method embodiments of this application are/is performed.

In addition, this application further provides a chip. The chip includes a processor. A memory configured to store a computer program is disposed independent of the chip. The processor is configured to execute the computer program stored in the memory, to enable a communication apparatus in which the chip is mounted to perform an operation and/or processing performed by a corresponding network element in any one of the method embodiments.

Further, the chip may include a communication interface. The communication interface may be an input/output interface, an interface circuit, or the like. Further, the chip may include the memory.

Optionally, there may be one or more processors, there may be one or more memories, and there may be one or more memories.

In addition, this application further provides a communication apparatus (which may be, for example, a chip or a chip system), including a processor and a communication interface. The communication interface is configured to receive (or referred to as input) data and/or information, and transmit the received data and/or information to the processor. The processor processes the data and/or information. The communication interface is further configured to output (or referred to as output) data and/or information processed by the processor, to enable an operation and/or processing performed by a corresponding network element in any one of the method embodiments to be performed.

In addition, this application further provides a communication apparatus, including at least one processor. The at least one processor is coupled to at least one memory. The at least one processor is configured to execute a computer program or instructions stored in the at least one memory, to enable the communication apparatus to perform an operation and/or processing performed by a corresponding network element in any one of the method embodiments.

In addition, this application further provides a communication device, including a processor and a memory. Optionally, the communication apparatus may further include a transceiver. The memory is configured to store a computer program. The processor is configured to invoke and run the computer program stored in the memory, and control the transceiver to receive and send a signal, to enable the communication device to perform an operation and/or processing performed by a corresponding network element in any one of the method embodiments.

This application further provides a communication system, including one or more network elements or devices in the first network element, the second network element, the first location management network element, the network repository network element, and the first positioning reference device in embodiment of this application.

The memory in embodiments of this application may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. Through examples rather than limitative descriptions, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (Synchlink DRAM, SLDRAM), and a direct rambus random access memory (direct rambus RAM, DRRAM). It should be noted that the memory of the systems and methods described in this specification includes but is not limited to these and any memory of another proper type.

The methods provided in the foregoing embodiments may be fully or partially implemented by using software, hardware, firmware, or any combination thereof. When the software is used to implement the methods, all or a part of the methods may be implemented in a form of a computer program product. The computer program product may include one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media.

For numbers of "first" and "second" in embodiments of this application, a person skilled in the art may understand that the numbers such as "first" and "second" do not limit a quantity and an execution sequence, and words such as "first" and "second" are not necessarily different.

In embodiments of this application, "at least one" means one or more, and "a plurality of means two or more. A term "and/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects. "At least one item (piece) of the following" or a similar expression thereof means any combination of these items, including a singular item (piece) or any combination of plural items (pieces). For example, at least one (piece) of a, b, and c may represent: a, b, c, a and b, a and c, b and c, or a, b, and c. Herein, a, b, and c may be singular or plural.

A person of ordinary skill in the art may be aware that, in combination with the examples described in embodiments disclosed in this specification, units and algorithm steps may be implemented by electronic hardware or a combination of computer software and the electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A positioning method, comprising:
receiving, by a first network element, a first message from a first location management network element, wherein the first message is used to request the first network element to provide information about a positioning reference device, information about one or more positioning reference devices exists in the first network element, and the positioning reference device is used for positioning measurement;
determining, by the first network element, one or more first positioning reference devices based on the first message; and
sending, by the first network element, the one or more first positioning reference devices to the first location management network element.

2. The method according to claim 1, wherein the first message comprises at least one of the following information:
information about a reference area of a first device, information about a neighboring reference area of the reference area of the first device, and first location information of the first device, wherein the first device is a positioned device.

3. The method according to claim 1 or 2, wherein the determining, by the first network element, one or more first positioning reference devices based on the first message comprises:
determining, by the first network element, the one or more first positioning reference devices based on the first message and/or a state of the one or more positioning reference devices.

4. The method according to any one of claims 1 to 3, wherein the method further comprises:
receiving, by the first network element, first information from the positioning reference device, wherein the first information indicates a capability of the positioning reference device.

5. The method according to any one of claims 1 to 4, wherein the method further comprises:
receiving, by the first network element, second information from the positioning reference device, wherein the second information indicates a state of the positioning reference device.

6. The method according to any one of claims 1 to 5, wherein the method further comprises:
sending, by the first network element, third information to the positioning reference device, wherein the third information indicates that the positioning reference device reports the state.

7. The method according to any one of claims 1 to 6, wherein the method further comprises:
obtaining, by the first network element, information about the capability of the positioning reference device from subscription information of the positioning reference device;
obtaining, by the first network element from subscription information of the positioning reference device, information about whether the positioning reference device is movable; and/or
obtaining, by the first network element, the state of the positioning reference device from subscription information of the positioning reference device.

8. The method according to any one of claims 1 to 7, wherein the method further comprises:
sending, by the first network element, an eighth message to a network repository network element, wherein the eighth message indicates that the positioning reference device exists in the first network element.

9. The method according to any one of claims 1 to 8, wherein the method further comprises:
receiving, by the first network element, fourth information of the first positioning reference device, wherein the fourth information comprises second location information and/or positioning measurement information, the second location information indicates a location of the first device that is measured by the first positioning reference device, and the positioning measurement information is used for timing correction.

10. The method according to any one of claims 1 to 9, wherein the method further comprises:
sending, by the first network element, the second location information and/or the positioning measurement information to the first location management network element, so that the first location management network element computes location information of the first positioning reference device and/or the first device.

11. The method according to any one of claims 1 to 10, wherein the first network element comprises:
an access and mobility management function network element or a location management function network element.

12. The method according to any one of claims 1 to 11, wherein the method further comprises:
sending, by the first network element, a paging message to the positioning reference device, wherein the paging message is used to page the positioning reference device in idle state.

13. The method according to any one of claims 1 to 12, wherein the method further comprises:
sending, by the first network element, a first indication to an access network device, wherein the first indication is used to notify the positioning reference device to return to a connected state.

14. The method according to any one of claims 1 to 13, wherein the method further comprises:
obtaining, by the first network element, the information about the one or more positioning reference devices from a unified data management network element.

15. A positioning method, comprising:
receiving, by a positioning reference device, a third message from a first network element, wherein the third message is used to request the positioning reference device to perform positioning measurement; and
sending, by the positioning reference device, fourth information to the first network element, wherein the fourth information comprises second location information and/or positioning measurement information, the second location information indicates a location of a first device that is measured by the positioning reference device, and the positioning measurement information is used for timing correction.

16. The method according to claim 15, wherein the method further comprises:
sending, by the positioning reference device, first information to the first network element, wherein the first information indicates a capability of the positioning reference device.

17. The method according to claim 15 or 16, wherein the method further comprises:
sending, by the positioning reference device, second information to the first network element, wherein the second information indicates a state of the positioning reference device.

18. The method according to any one of claims 15 to 17, wherein the method further comprises:
receiving, by the positioning reference device, third information from the first network element, wherein the third information indicates that the positioning reference device reports the state.

19. The method according to any one of claims 15 to 18, wherein the method further comprises:
receiving, by the positioning reference device, a paging message from the first network element, wherein the paging message is used to page the positioning reference device in idle state.

20. A positioning method, comprising:
sending, by a first location management network element, a fifth message to a network repository network element, wherein the fifth message comprises fifth information, the fifth information is used to discover a first network element in which a positioning reference device exists, and the positioning reference device is used for positioning measurement; and
receiving, by the first location management network element from the network repository network element, information about one or more first network elements in which the positioning reference device exists, a configuration of the one or more first network elements in which the positioning reference device exists, or a network function instance of the one or more first network elements in which the positioning reference device exists.

21. The method according to claim 20, wherein the method further comprises:
receiving, by the first location management network element, a seventh message, wherein the seventh message is used to request location information of the positioning reference device or a first device, is used to request to determine the location information of the positioning reference device or the first device, or is used to provide the location information of the positioning reference device or the first device.

22. The method according to claim 20 or 21, wherein the fifth message further comprises at least one of the following information:
information about a reference area of the first device and/or information about a neighboring reference area of the reference area of the first device, wherein the first device is a device on which positioning measurement is performed.

23. The method according to any one of claims 20 to 22, wherein the method further comprises:
sending, by the first location management network element, a first message to the first network element, wherein the first message is used to request the first network element to provide information about the positioning reference device, and the first network element belongs to the one or more network elements in which the positioning reference device exists.

24. The method according to any one of claims 20 to 23, wherein the first message comprises at least one of the following information:
the information about the reference area of the first device, the information about the neighboring reference area of the reference area of the first device, and first location information of the first device.

25. The method according to any one of claims 20 to 24, wherein the first network element comprises:
an access and mobility management function network element or a location management function network element.

26. A positioning method, comprising:
receiving, by a network repository network element, a fifth message from a first location management network element, wherein the fifth message comprises fifth information, the fifth information is used to discover a first network element in which a positioning reference device exists, and the positioning reference device is used for positioning measurement; and
sending, by the network repository network element to the first location management network element, information about one or more first network elements in which the positioning reference device exists, a configuration of the one or more first network elements in which the positioning reference device exists, or a network function instance of the one or more first network elements in which the positioning reference device exists.

27. The method according to claim 26, wherein the fifth message further comprises at least one of the following information:
information about a reference area of a first device and/or information about a neighboring reference area of the reference area of the first device, wherein the first device is a device on which positioning measurement is performed.

28. The method according to claim 26 or 27, wherein the first network element comprises:
an access and mobility management function network element or a location management function network element.

29. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 28.

30. A communication system for positioning a device, comprising:
a first network element, configured to perform the method according to any one of claims 1 to 14;
a positioning reference device, configured to perform the method according to any one of claims 15 to 19;
a first location management network element, configured to perform the method according to any one of claims 20 to 25; and
a network repository network element, configured to perform the method according to any one of claims 20 to 25.
